# EUROPEAN PATENT SPECIFICATION

(11) **EP 3 315 527 B1**
(45) Date of publication and mention of the grant of the patent: **05.05.2021**
(21) Application number: 16196733.6
(22) Date of filing: 01.11.2016
(51) Int. Cl.: C08G 18/72, C08G 18/76, C08G 18/28, C08G 18/40, C08G 18/42, C09J 175/04, C09J 175/06, C08G 18/12, C08G 18/30, B29B 7/72

(54) **MOISTURE CURING HOT-MELT ADHESIVE WITH LOW CONTENT OF DIISOCYANATE MONOMERS, REDUCED REST TACKINESS AND HIGH THERMAL STABILITY**
FEUCHTIGKEITSHÄRTENDER HEISSSCHMELZKLEBSTOFF MIT NIEDRIGEM GEHALT AN DIISOCYANATMONOMEREN, REDUZIERTER RESTKLEBRIGKEIT UND HOHER THERMISCHER STABILITÄT
ADHÉSIF THERMOFUSIBLE DURCISSANT À L'HUMIDITÉ AYANT UNE FAIBLE TENEUR EN MONOMÈRES DIISOCYANATES À ADHÉRENCE DE REPOS RÉDUITE ET STABILITÉ THERMIQUE ÉLEVÉE

(43) Date of publication of application: 02.05.2018
(73) Proprietor: Sika Technology AG, 6340 Baar (CH)
(72) Inventor: Janke, Doreen, 25486 Alveslohe (DE); Bien, Kathrin, 21337 Lüneburg (DE); Schmider, Martin, 22303 Hamburg (DE)
(74) Representative: Sika Patent Attorneys

(56) References cited:
- EP-A1- 0 755 414
- US-A1- 2004 194 881
- US-A1- 2016 083 540

## Description

### Technical field

The invention relates to moisture curing hot-melt adhesives having low content of diisocyanate monomers and reduced rest tackiness and to use of such adhesives for pre-coating foils.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable curing of the adhesive by chemically crosslinking the polymers. Due to the cured polymer matrix the reactive hot-melts do not soften upon heating and these adhesives are, therefore, suitable for use also at elevated temperatures. The curing of the polymers can be initiated, for example, by heating or exposing the composition to atmospheric moisture or water. Moisture curing hot-melt adhesives typically contain polymers functionalized with isocyanate or silane groups, which enable the crosslinking of the polymer chains upon contact with water, such as atmospheric moisture.

Reactive polyurethane hot-melt (PU-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. These adhesives develop a high initial adhesive strength immediately after application by cooling and acquire their ultimate properties, especially heat stability and resistance to environmental influences by the gradual curing process.

Due to the oligomer size distribution present in a polyurethane synthesis comprising reacting polyols with a stoichiometric excess of polyisocyanates, PU-RHM adhesives typically contain significant quantities of unreacted monomeric isocyanates or polyisocyanates ("monomers"). The application temperature of hot-melt adhesives, such as from 85 to 200°C, in particular from 120 to 160°C, raises the vapor pressure of the unreacted isocyanate monomers and causes them to volatilize. Due to the toxicity of the certain isocyanate monomers, additional steps are often taken to reduce their atmospheric concentration in areas to which personnel are exposed. In some cases, ventilated structures such as "down draft booths" are provided to minimize personnel exposure to the volatilized monomers. However, providing such ventilated structures can be costly and difficult. The legislator in the EU also requires products to be labeled as harmful (Xn), if their unreacted monomeric diisocyanate content exceeds the limit of 0.1 % by weight. At a concentration of monomeric MDI of > 1%, moreover, these products must be labeled with an additional phrase: "H351 - Suspected of causing cancer". For these reasons, various efforts have been made to reduce the monomer content in PU-RHM adhesives.

One obvious approach is the physical removal of the residual monomers from the prepolymer reaction product by distillation or extraction, as described for example in WO 01/14443 A1 and WO 01/40340 A2 (distillation) and also in US 6133415, DE 19616046 A1, and EP 0337898 A1 (extraction). These techniques involve complex apparatus and are therefore expensive; furthermore, they are not readily applicable to every type of monomers. It is also known to replace at least part of the monomeric polyisocyanate content with stripped polyurethane prepolymers, such as Desmodur® LS 2397 (Bayer), in mixtures used for the preparation of PU-RHM adhesive compositions. These types of adhesive compositions have, however, been found to suffer from reduced heat stability, inadequate storage stability, and decreased initial adhesive strength.

Furthermore, it has been found that State-of-the-art PU-RHM adhesives prepared from mixtures containing low amount of monomeric diisocyanates suffer from high rest tackiness, i.e. the adhesive film remains tacky after the open time. The high rest tackiness of an adhesive composition causes serious problems in applications, in which the adhesive is pre-applied to a substrate, such as a plastic foil, which is stored in rolls before being laminated to another substrate. In a modern high-throughput laminating process, such pre-coated foil should be wounded up in rolls as soon as possible after the open time of the applied adhesive in order to maximize the speed of production. A foil with a tacky adhesive film cannot be wounded up in rolls since the adhesive layer would stick to the upper surface of the adjacent foil in the roll and prevent, or at least make it difficult, to unwind the roll in the subsequent process step. If such foils having a tacky layer were used in a laminating process, part of the adhesive layer would remain as blocks on the opposite surface of the foil after unwinding of the roll. This so called blocking behavior of the hot-melt adhesive composition typically results in unscheduled production interruptions and quality inconsistences. Due to the high rest tackiness some state-of-the-art moisture curing PU-RHM adhesives are practically completely unsuitable for use as adhesives in laminating processes based on the use of foils having a pre-coated layer of adhesive.

There is thus a need for a PU-RHM adhesive with low content of polyisocyanate monomers, in particular diisocyanate monomers, which adhesive is suitable for use as adhesive in a thin film laminating process.

### Summary of the invention

The object of the present invention is to provide a moisture curing polyurethane hot-melt adhesive composition, which overcomes the disadvantages of the prior art adhesives as discussed above.

In particular, it is an object of the present invention to provide a moisture-curing polyurethane hot-melt adhesive composition, which has low content of unreacted polyisocyanate monomers, in particular diisocyanate monomers, reduced rest tackiness, and increased thermal stability.

The objective can be achieved with the moisture curing hot-melt adhesive composition as defined in claim 1.

It was surprisingly found out that the rest tackiness of a conventional low-monomer content moisture curing polyurethane hot-melt adhesive can be drastically reduced by the addition of relatively small amount of crystalline monofunctional alcohol to mixtures from which the adhesive composition is prepared. Furthermore, it was surprisingly found out that the addition of crystalline monofunctional alcohol does not result in substantial impairment of the other adhesive properties such as initial adhesion strength, thermal stability, and curing rate of the hot-melt adhesive composition. The result is unexpected since a person skilled in the art would expect the addition crystalline monofunctional alcohols to result at least in decreased curing rate and impaired thermal stability of the adhesive composition.

One of the advantages of the moisture curing hot-melt adhesive composition of the present invention is that due to the low content of unreacted diisocyanate monomers it can be sold without the H351-labelling. The adhesive composition can also be used as hot-melt adhesive in open line applications without exposing the users to emissions of monomeric diisocyanates.

Another advantage is that the moisture curing hot-melt composition of the present invention has a reduced rest tackiness, which makes it suitable for use in laminating processes based on the use of substrates having a pre-coated adhesive layer. Furthermore, the moisture curing hot-melt adhesive has high thermal stability, fast curing rate and good storage stability.

According to a further aspect of the present invention, a method for producing a moisture curing hot-melt adhesive composition, a method for adhesively bonding foils together and an article obtained by the bonding method, are provided.

### Detailed description of the invention

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "monomer" designates a molecule having at least one polymerizable group. A monomeric di- or polyisocyanate contains in particular no urethane groups. Oligomers or polymer products of diisocyanate monomers such as adducts of monomeric diisocyanates are not monomeric diisocyanates. The monomeric di- or polyisocyanate has in particular a molecular weight of not more than 1000 g/mol, preferably not more than 500 g/mol, and more preferably not more than 400 g/mol.

The term "prepolymer" designates a polymer, which contains at least one, usually two or more, reactive group(s). For example, polyurethane prepolymer contains one or more unreacted isocyanate groups. By way of the reactive groups, the prepolymer may be chain-extended, crosslinked or cured.

The term "(meth)acrylic" designates methacrylic or acrylic. A (meth)acryloyl group is also known as (meth)acryl group. A (meth)acrylic compound can have one or more (meth)acryl groups (mono,- di-, tri- etc. functional (meth)acrylic compounds) and it may be a monomer, prepolymer, an oligomer, or a polymer.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties.

The term "softening point" or "softening temperature" designates a temperature at which compound softens in a rubber-like state, or a temperature at which the crystalline portion within the compound melts. The softening point can be measured by a ring and ball method according to DIN EN 1238.

The present invention relates in a first aspect of the invention to a moisture curing hot-melt adhesive composition comprising at least one isocyanate-functional polyurethane prepolymer modified with crystalline monofunctional alcohol, wherein the adhesive composition has a monomeric diisocyanate content of not more than 1.0 % by weight, preferably not more than 0.9 % by weight, most preferably not more than 0.8 % by weight, based on the total weight of the moisture curing hot-melt adhesive composition.

The "isocyanate-functional polyurethane prepolymer" refers here any type of polyurethane prepolymer obtainable by reacting excess of polyisocyanates, preferably diisocyanates, with one or more polyols. The term "isocyanate-functional polyurethane prepolymer modified with crystalline monofunctional alcohol" refers in this document to a reaction product obtainable by reacting at least one crystalline monofunctional alcohol with the polyisocyanate end groups of a isocyanate-functional polyurethane prepolymer at typical prepolymerization reaction conditions, such as at temperatures of 140 °C, optionally in the presence of a catalyst.

According to the invention, the isocyanate-functional polyurethane prepolymer modified with crystalline monofunctional alcohol is a reaction product of one or more polyols, one or more crystalline monofunctional alcohols, and one or more isocyanate-functional polyurethane prepolymers. The isocyanate-functional polyurethane prepolymer can be any type of isocyanate-functional polyurethane prepolymer, which has not been modified with crystalline monofunctional alcohol. According to the invention, the isocyanate-functional polyurethane prepolymer has a monomeric diisocyanate content of less than 1.0 % by weight.

The polyols, crystalline monofunctional alcohols, isocyanate-functional polyurethane prepolymers, and monomeric polyisocyanates used in the preparation of the isocyanate-functional polyurethane prepolymer modified with crystalline monofunctional alcohol may be the same as those elucidated below as component a), component b), component c) and component d), respectively, including the preferred embodiments identified there.

Suitable crystalline monofunctional alcohols include crystalline monalcohols, preferably alkyl alcohols such as linear polyethylene monoalcohols, having 20 - 100, preferably 25 - 50, most preferably 30 - 50 carbon atoms. Such crystalline monalcohols are available, for example, as Unilin® alcohols from Baker Hughes. In particular, suitable crystalline monofunctional alcohols have a melting point of at least 60°C, preferably at least 70°C. The crystalline monofunctional alcohols may have a melting point in the range from 60 to 130°C, preferably from 70 to 120°C, most preferably from 80 to 110°C.

It may be advantageous that the isocyanate-functional polyurethane prepolymer modified with crystalline monofunctional alcohol is solid at temperature of 20°C. The modified polyurethane prepolymer may be crystalline, semicrystalline or amorphous and it may have a viscosity at 20°C of more than 5000 Pa·s. Furthermore, it may be preferable if the isocyanate-functional polyurethane prepolymer modified with crystalline monofunctional alcohol has a molecular weight of more than 1000 g/mol, particularly in the range of 1200 - 50 000 g/mol, preferably 2000 - 30 000 g/mol.

Preferably, the isocyanate-functional polyurethane prepolymer modified with crystalline monofunctional alcohol has an average isocyanate functionality in the range of 1.8 - 2.2. The term "isocyanate functionality" (NCO-functionality) refers in this document to the average number of isocyanate groups per molecule of a polyisocyanate compound. The isocyanate functionality can be determined from the molecular weight and NCO-content of the compound measured according to DIN 53185.

The amount of the isocyanate-functional polyurethane prepolymer modified with crystalline monofunctional alcohol in the moisture curing hot-melt adhesive is not subject to any particular restrictions except that its amount should not be so high that it results in substantial impairment of the adhesion of the hot-melt adhesive. A substantial impairment is understood to mean, in the context of the present disclosure, that the adhesion of a hot-melt adhesive composition containing the isocyanate-functional polyurethane prepolymer modified with monofunctional alcohol to the same substrate is more than 50 % lower than in the case of a hot-melt adhesive composition containing, instead of the modified polyurethane prepolymer, the same quantity of a non-modified polyurethane prepolymer.

Preferably, the moisture curing hot-melt composition comprises 10.0 - 70.0 % by weight, more preferably 15.0 - 60.0 % by weight, most preferably 20.0 - 50.0 % by weight of the isocyanate-functional polyurethane prepolymer modified with crystalline monofunctional alcohol.

Preferably, the moisture curing hot-melt adhesive composition has a rest tackiness of less than 60 s, more preferably less than 50 s, most preferably less than 40 s, determined by means of the method for measuring rest tackiness.

The term "rest tackiness" refers to the length of the time period after the open time for which the adhesive remains tacky. In the context of the present invention, the rest tackiness of a hot-melt adhesive composition is determined using the measurement method as described below. Moisture curing hot-melt adhesive compositions having rest tackiness in the above stated ranges have been found especially suitable for use in high-throughput lamination processes, in which the substrate, such as a foil, is wounded up in a roll shortly after the application of the adhesive to the substrate.

### Method for determining the rest tackiness

The tested adhesive composition is placed in a sealed tube and preheated in an oven at a temperature of 140°C for a time period of 20 minutes. A sample of 20 g of the molten adhesive is applied with a doctor blade to surface of a silicone paper (B700 white, Laufenberg & Sohn KG) strip placed on a heating plate. The silicone paper has dimensions of 30 cm x 10 cm and the adhesive is applied as a film having a thickness of 500 µm and dimensions of 30 cm x 6 cm. Before applying the adhesive film, the silicone paper strip and the doctor blade are heated to a temperature of 150°C with the heating plate.

Immediately after application of the adhesive, the silicone paper strip is removed from the heating plate and placed (with the adhesive film facing upwards) on a sheet of plywood at normal room temperature (23°C). After the open time of the adhesive, which has been previously determined using the measurement method as described below, the rest tackiness is determined as follows: every 10 seconds a short strip of silicone paper having dimensions of 10 cm x 1 cm formed in a roll (non-siliconized surface facing outwards) is placed on the adhesive film and then slowly removed to separate the silicone paper strip from the adhesive film. In case the silicone paper strip cannot be easily separated from the adhesive film, the adhesive film is considered to be still tacky and the procedure is repeated after another time period of 10 seconds. In the opposite case, the adhesive film is considered to be non-tacky and the rest tackiness equals the time between the starting point of the measurement (end of open time) and the time of the last measurement.

The moisture curing hot-melt adhesive composition of the present invention composition having a monomeric diisocyanate content, of not more than 1.0 % by weight, preferably not more than 0.9 % by weight, most preferably not more than 0.8 % by weight, is obtainable by reacting one or more polyols, one or more crystalline monofunctional alcohols, and one or more isocyanate-functional polyurethane prepolymers having a monomeric diisocyanate content of less than 1.0 % by weight, the ratio of isocyanate groups to hydroxyl groups in the reaction mixture having a value in the range of 1.5 - 2.5, most preferably 1.2 - 2.2. The reaction may be carried out at typical prepolymerization reaction conditions, such as at temperatures of 140°C, optionally in the presence of a catalyst.

Preferably, the moisture curing hot-melt adhesive composition of the present invention is obtainable by a process comprising:
A) providing a mixture comprising one or more polyols as component a) and one or more crystalline monofunctional alcohols as component b),
B) adding an isocyanate-functional polyurethane prepolymer having a monomeric diisocyanate content of less than 1.0 % by weight as component c) to the mixture obtained in step A), the ratio of isocyanate groups to hydroxyl groups in the mixture having a value in the range of 1.5 - 2.5,
C) carrying out reaction to give a reaction product comprising at least one isocyanate-functional polyurethane prepolymer modified with crystalline monofunctional alcohol, or
A) providing a mixture comprising one or more polyols as component a) and an isocyanate-functional polyurethane prepolymer having a monomeric diisocyanate content of less than 1.0 % by weight as component c), the ratio of isocyanate groups to hydroxyl groups in the mixture having a value of at least 2.5, preferably at least 3.0,
B) carrying out the reaction to give an intermediate reaction product, and
C) adding at least one crystalline monofunctional alcohol as component b) to the intermediate reaction product and carrying out reaction to give a reaction product comprising at least one isocyanate-functional polyurethane prepolymer modified with crystalline monofunctional alcohol.

Preferably, the mixture provided in step A) is obtained by mixing the respective components at an elevated temperature to give a homogeneous mixture, in particular at a temperature, for example, of at least 90°C, preferably at least 110°C, and more preferably at least 130°C.

According to one or more embodiments, the mixture provided in step A) further comprises at least one poly(meth)acrylate.

Preferably, step A) comprises dissolving at least one polyether polyol in the at least one poly(meth)acrylate followed by addition of one or more polyols, preferably polyester polyols, and one or more crystalline monofunctional alcohols as component b) to the thus obtained mixture.

The at least one poly(meth)acrylate is a homopolymer or copolymer of at least one (meth)acrylic acid ester and optionally one or more further comonomers. Suitable (meth)acrylic acid esters include C₁-C₁₂-alkyl(meth)acrylates, preferably C₁-C₄-alkyl(meth)acrylates. Preferable acrylic acid esters and methacrylic acid esters do not contain further functional groups such as hydroxyl- and carboxyl groups. Acrylic acid esters and methacrylic acid esters containing hydroxyl- and/or carboxyl groups can, however, be used in combination with acrylic acid esters and methacrylic acid esters without further functional groups.

Suitable (meth)acrylic acid esters include methylacrylate, ethylacrylate, n-butylacrylate, tert-butylacrylate, iso-butylacrylate, 2-ethylhexylacrylate, laurylacrylate, methylmethacrylate, ethylmethacrylate and n-butylmethacrylate. Suitable (meth)acrylic acid esters with further functional groups include maleic acid, 2-hydroxyethylacrylate, 2-hydroxyethylmethacrylate, hydroxypropylacrylate, propylene glycol methacrylate, butanediol monoacrylate and butanediol monomethacrylate.

Examples of suitable further comonomers include styrene, acrylonitrile, vinyl acetate, vinyl propionate and vinyl chloride. Examples of suitable auxiliary comonomers, which are typically used only in low amounts, include acrylic acid, methacrylic acid, itaconic acid, maleic acid, fumaric acid, crotonic acid and amides thereof.

Preferred poly(meth)acrylates include copolymers obtained by radical polymerization of one or more acrylic acid esters and/or methacrylic acid esters optionally in combination with one or more hydroxyl-functional acrylic acid esters and/or hydroxyl-functional methacrylic acid esters.

Preferably, the at least one poly(meth)acrylate is a homopolymer or copolymer of at least one (meth)acrylic acid ester, hydroxyl-functional (meth)acrylic acid ester or a combination thereof and at least one further comonomer, wherein at least one (meth)acrylic acid ester does not contain further functional groups.

Preferably, the at least one poly(meth)acrylate is a copolymer of methylmethacrylate and n-butylmethacrylate and at least one further comonomer, such as hydroxyl-functional (meth)acrylic acid ester.

Suitable poly(meth)acrylates are available commercially as Dynacoll®AC from Evonik.

Preferably, the at least one poly(meth)acrylate has an average molecular weight of 10000 to 200000 g/mol, more preferably 20000 to 150000 g/mol. Preferably, the amount of the at least one poly(meth)acrylates, if present in the mixture provided in step A), is 10.0 - 50.0 % by weight, more preferably 15.0 - 45.0 % by weight, most preferably 15.0 - 40.0 % by weigh, based on the total weight of components a) to c).

Preferably, the process further comprises:
D) adding one or more monomeric polyisocyanates, preferably diisocyanates, as component d) to the mixture provided in step A) or to the reaction product obtained in step C) and carrying out reaction.

The addition of one or more monomeric polyisocyanates as component d) has been found to improve the initial adhesion strength and the thermal stability of the moisture curing hot-melt adhesive composition.

The amount of the monomeric polyisocyanates as component d) is not subject to any particular restrictions except that the amount thereof should be low enough to obtain moisture curing hot-melt adhesive composition containing less than 1.0 % by weight of monomeric diisocyanates. According to one or more embodiments, the amount monomeric polyisocyanates, preferably diisocyanates, added to the mixture provided in step A) or to the reaction product obtained in step C) as component d) is less than 2.0 % by weight, more preferably less than 1.5 % by weight, most preferably less than 1.0 % by weight, based on the total weight of the components a) to d).

The amount of monomeric diisocyanates in the moisture curing hot-melt adhesive composition can be decreased by using more isocyanate-functional polyurethane prepolymers with low monomer content and less monomeric diisocyanates for preparation of the hot-melt adhesive composition. The hot-melt adhesive compositions prepared from mixtures containing very low amount of monomeric diisocyanates are, however, also known to suffer from reduced heat stability, inadequate storage stability and decreased adhesion strength.

It has been found out that a moisture hot-melt adhesive composition having low monomeric diisocyanate content, reduced rest tackiness, high heat stability and good storage stability is obtainable by a process, which further comprises
D) adding one or more monomeric polyisocyanates, preferably diisocyanates, as component d) to the mixture provided in step A) and carrying out reaction, wherein the amount of the one or more monomeric polyisocyanates as component d) is 5.0 - 20.0 % by weight, preferably 7.5 - 15.0 % by weight, based on the total weight of the components a) to d), and wherein
   the process further comprises
E) adding at least one mercaptosilane of formula (I) as component e)

   HS-R³-Si(X)₍₃₋ₐ₎(R²)ₐ (I)

   in which R² is a linear or branched alkyl group having 1 to 10 C atoms, R³ is a linear or branched alkylene group having 1 to 10 C atoms, X is a hydrolyzable radical, and a has a value of 0, 1 or 2, preferably 0,
to the reaction product obtained in step C) and carrying out the reaction to give a reaction product modified with the mercaptosilane.

The thiol group of the mercaptosilane of formula (I) added to the reaction product obtained in step C) reacts with the isocyanate groups present in the compounds of the reaction product, in particular with the isocyanate groups of the isocyanate-functional polyurethane prepolymers and with the isocyanate groups of the unconverted monomeric polyisocyanates.

In the reaction of the thiol groups of the mercaptosilane with the isocyanate groups present in the reaction product, the reaction involved is a commonly known addition reaction, in which thiourethane or thiolourethane groups are formed. Without wishing to be tied to any theory, it is assumed that the mercaptosilane reacts preferentially with the more reactive monomeric polyisocyanates, especially with diisocyanates, so reducing the monomeric polyisocyanate fraction in the reaction product. A reaction of the mercaptosilane with the isocyanate-functional polyurethane prepolymers and/or with the isocyanate-functional polyurethane prepolymers modified with crystalline monofunctional alcohol present in the reaction product is, however, likewise possible.

The reaction of the mercaptosilane with the reaction product to form the modified reaction product takes place preferably at an elevated temperature, as for example at a temperature of at least 60°C, preferably at least 100°C, more preferably at least 110°C or at least 140°C. The duration of the reaction is of dependent on the temperature used, but may for example be from 0.5 to 2 hours, preferably from 45 minutes to 1.5 hours.

The reaction with the mercaptosilane may be conducted in the presence of a catalyst. Examples of suitable catalysts include titanates, organotin compounds, bismuth compounds, with organic ligands and/or complex ligands, for example, and compounds containing amino groups.

### Component a)

One or more polyols may be used as component a). Preferred polyols are one or more polyether polyols, one or more polyester polyols, one or more polycarbonate polyols, and mixtures thereof. The preference given to different polyols depends on the application requirements. Preferred polyols are, for example, diols or triols or mixtures thereof. Particularly preferred are one or more diols, more particularly one or more polyether diols, one or more polyester diols, one or more polycarbonate diols, and mixtures thereof. Particularly preferred polyols are one or more polyester polyols, for example, polyester triols and, in particular, polyester diols. Suitable polyester polyols are amorphous, semicrystalline or crystalline polyester polyols which are liquid at 25°C, such as polyester triols and especially polyester diols, and mixtures of these polyester polyols. Liquid polyols refer to polyols, which are liquid at a temperature of 25°C. The preferred liquid polyester polyols have a melting point of between 0 to 25°C.

The polyol as component a) may be a mixture of a liquid polyester polyol, such as a polyester triol or, preferably, a polyester diol, with at least one amorphous, semicrystalline or crystalline polyester polyol, such as a polyester triol or more particularly a polyester diol. Preference can also be given to mixtures of one or more liquid polyester diols with one or more non-liquid amorphous, semicrystalline or crystalline polyester diols. Preferred polyols also include one or more amorphous polycarbonate diols, and also mixtures of polyester diols and polycarbonate diols.

Suitable polyester polyols, for example, polyester triols and especially polyester diols, have an average molecular weight of 1000 to 15 000 g/mol, preferably of 1500 to 8000 g/mol, and more preferably of 1700 to 5500 g/mol.

Especially suitable polyester polyols, preferably polyester triols and especially polyester diols, are those which are prepared from dihydric to trihydric, preferably dihydric, alcohols, such as, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also called polycaprolactones.

Particularly suitable polyester polyols are polyester polyols made from adipic acid, sebacic acid or dodecanedicarboxylic acid as dicarboxylic acid and from hexanediol or neopentyl glycol as dihydric alcohol. Further examples of suitable polyester polyols are polyester polyols of oleochemical origin. Polyester polyols of this kind may be prepared, for example, by complete ring opening of epoxidized triglycerides of a fat mixture comprising at least partly olefinically unsaturated fatty acid, with one or more alcohols having 1 to 12 C atoms, and by subsequent partial transesterification of the triglyceride derivatives to give alkyl ester polyols having 1 to 12 C atoms in the alkyl radical.

Particularly suitable crystalline or semicrystalline polyester polyols are adipic acid/hexanediol polyester and dodecanedicarboxylic acid/hexanediol polyesters. Suitable polycarbonate polyols are those as are obtainable by reaction, for example, of the abovementioned dihydric or trihydric alcohols - those used to synthesize the polyester polyols - with dialkyl carbonates, diaryl carbonates or phosgene. Polycarbonate diols are particularly suitable, especially amorphous polycarbonate diols. Other suitable polyols are castor oil and its derivatives or hydroxy-functional polybutadienes, which are available, for example, under the "Poly-bd" trade name.

Suitable polyether polyols, also called polyoxyalkylene polyols, are those which are polymerization products of ethylene oxide, 1,2-propylene oxide, 1,2- or 2,3-butylene oxide, tetrahydrofuran or mixtures thereof, optionally polymerized by means of a starter molecule having two or more active hydrogen atoms, such as, for example, water, ammonia or compounds having two or more OH- or NH- groups such as 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3-and 1,4-cyclohexanedimethanol, bisphenol A, hydrogenated bisphenol A, 1,1,1-trimethylolethane, 1,1,1-trimethylolpropane, glycerol, aniline, and mixtures of the aforesaid compounds. Use can be made both of polyoxyalkylene polyols which have a low degree of unsaturation (measured according to ASTM D-2849-69 and expressed as milliequivalents of unsaturation per gram of polyol (meq/g)), produced for example by means of double metal cyanide complex catalysts (DMC catalysts), and of polyoxyalkylene polyols having a relatively high degree of unsaturation, produced for example by means of anionic catalysts such as NaOH, KOH or alkali metal alkoxides.

Particularly suitable polyether polyols are polyoxyalkylene diols or polyoxyalkylene triols, especially polyoxyethylene diols or polyoxyethylene triols. Especially suitable are polyoxyalkylene diols or polyoxyalkylene triols, more particularly polyoxypropylene diols and triols, having an average molecular weight in the range from 1000 to 30 000 g/mol, and also polyoxypropylene diols and triols having an average molecular weight of 400 to 8000 g/mol. Polyether polyols of these kinds are sold, for example, under the Acclaim® and Desmophene® trade names by Bayer AG.

Likewise particularly suitable are so-called "EO-endcapped" (ethylene oxide-endcapped) polyoxypropylene diols or triols. The latter are special polyoxypropylene-polyoxyethylene polyols, which are obtained, for example, by alkoxylating pure polyoxypropylene polyols with ethylene oxide after the end of the polypropoxylation process, and which therefore have primary hydroxyl groups.

The amount of the one or more polyols as component a) in the mixture provided in step A) is not subject to any particular restrictions except that the amount of the polyols should be selected such that the requirement for the defined ratio of isocyanate groups to hydroxyl groups in the mixture is fulfilled. The amount of the one or more polyols as component a), in the mixture provided in step A), can be 20.0 - 70.0 % by weight, preferably 30.0 - 70.0 % by weight, more preferably 35.0 - 65.0 % by weight, most preferably 40.0 - 60.0 % by weight, based on the total weight of the components a) to c).

### Component b)

One or more crystalline monofunctional alcohols can be used as component b). Suitable crystalline monofunctional alcohols include crystalline monoalcohols, preferably alkyl alcohols such as linear polyethylene monoalcohols, having 20 - 100, preferably 25 - 50, most preferably 30 - 50 carbon atoms. Such crystalline monalcohols are available, for example, as Unilin® alcohols from Baker Hughes. In particular, suitable crystalline monofunctional alcohols have a melting point of at least 60 °C, preferably at least 70 °C. The crystalline monofunctional alcohols may have a melting point in the range from 60 to 130 °C, preferably from 70 to 120 °C, most preferably from 80 to 110 °C.

Preferably, the amount of the crystalline monofunctional alcohol as component b), in the mixture provided in step A) or added to the intermediate reaction product in step C), is 0.5 - 10.0 % by weight, preferably 0.5 - 7.5 % by weight, more preferably 1.0 - 5.0 % by weight, most preferably 1.0 - 3.0 % by weight, based on the total weight of the components a) to c).

Moisture curing hot-melt adhesive compositions prepared from mixtures comprising crystalline monofunctional alcohol as component b) in the amounts within the above defined ranges have been found to have particularly low rest tackiness. Such moisture curing hot-melt adhesive compositions have also been found to provide good adhesion strength, thermal stability and fast curing rate.

### Component c)

One or more isocyanate-functional polyurethane prepolymers having a monomeric diisocyanate content of less than 1.0 % by weight can be used as component c). Preferably, the one or more isocyanate-functional polyurethane prepolymer has a monomeric diisocyanate content of not more than 0.5 % by weight, more preferably not more than 0.15 % by weight. It may also be substantially free from monomeric diisocyanates. The isocyanate-functional polyurethane prepolymer used as component c) is referred below as "polyurethane prepolymer with low monomer content".

The polyurethane prepolymer with low monomer content is prepared in the usual way by reacting of one or more polyols and one or more monomeric polyisocyanates in the presence of a catalyst. As discussed above, the isocyanate-functional polyurethane prepolymers prepared by conventional processes contain significant amounts of unconverted monomeric polyisocyanates, the amount being in general more than 1.0 % by weight of the reaction product. The monomeric polyisocyanate which is a reactant for the polyurethane prepolymer with low monomer content and which may be present in the reaction product, has in particular a molecular weight of not more than 1000 g/mol, preferably not more than 500 g/mol, and more preferably not more than 400 g/mol.

As noted in the discussion of the prior art, there are known processes for preparing isocyanate-functional polyurethane prepolymers with low monomer content, and these are hereby referenced. Reference is made in particular to the use of specific diisocyanates having isocyanate groups of different reactivities, such as WO 03/033562 A1, WO 03/006521 A1, and WO 03/055929 A1, for example; the use of adducts or oligomers of the monomeric polyisocyanates, as described in WO 01/40342 A1 and DE 4429679 A1, for example; and the after treatment of the isocyanate-functional polyurethane prepolymers prepared by a conventional process by distillation or extraction in order to reduce the residual monomeric polyisocyanate content of the reaction product, as described in WO 01/14443 A1, WO 01/40340 A2, US 6133415, DE 19616046 A1 or EP 0337898 A1, for example. The polyurethane prepolymers with low monomer content obtainable by these processes can be used in the process used for the preparation of the moisture curing hot-melt adhesive composition of the present invention. Polyurethane prepolymers with low monomer content of this kind are also available commercially.

The polyols and polyisocyanates which may be used for preparing the isocyanate-functional polyurethane prepolymers with low monomer content may be the same as those described as the component a) and the component d), including the preferred embodiments identified there, with the proviso that the selection is confined in this respect with regard to the abovementioned techniques using specific polyisocyanates. Preferred isocyanate-functional polyurethane prepolymers with low monomer content are those in which the monomer content has been reduced by extraction or, in particular, distillation. The distillation may take place, for example, by stripping on a thin-film evaporator.

Particularly preferred as isocyanate-functional polyurethane prepolymer with low monomer content as component c) is a reaction product of at least one polyol and at least one monomeric diisocyanate, with residual monomeric diisocyanate having been removed by distillation or extraction to a residual content of below 1.0 % by weight, preferably not more than 0.5 % by weight, more preferably not more than 0.15 % by weight, based on the total weight of the reaction product.

The isocyanate-functional polyurethane prepolymer having a monomeric diisocyanate content of less than 1.0 % by weight is preferably obtained as a reaction product of at least one polyol and at least one monomeric diisocyanate, wherein the polyol is a polyether polyol, preferably a polypropylene glycol, or a liquid polyester polyol, and the monomeric diisocyanate is preferably selected from the group consisting of MDI, TDI, HDI, and IPDI, more preferably 4,4'-MDI and IPDI, and wherein the monomeric diisocyanate content of the reaction product has subsequently been reduced or largely removed from the reaction product by extraction or, in particular, distillation.

In particular preference is given to using isocyanate-functional polyurethane prepolymers having a monomeric diisocyanate content of less than 1.0 % by weight obtained by reaction of a polyether polyol, such as polypropylene ether glycol, and MDI with subsequent removal of unconverted MDI from the reaction product. Polyurethane prepolymer with low monomer content of this kind is available commercially as Desmodur® LS 2397 from Bayer Material Science. Desmodur® LS 2397 has a MDI monomer content of not more than 0.15 % by weight and an average molecular weight of 1100-1500 g/mol.

Preferably, the amount of the isocyanate-functional polyurethane prepolymer having monomeric diisocyanate content of less than 1.0 % by weight as component c), added to the mixture in step B) or present in the mixture provided in step A), is 10.0 - 70.0 % by weight, preferably 25.0 - 70.0 % by weight, more preferably 35.0 - 65.0 % by weight, most preferably 40.0 - 60.0 % by weight, based on the total weight of the components a) to c). Moisture curing hot-melt adhesive compositions prepared from mixtures comprising isocyanate-functional polyurethane prepolymer with low monomer content as component c) in the above defined amounts have been found to have monomeric diisocyanate content of not more than 1.0 % by weight.

### Component d)

One or more monomeric polyisocyanates, preferably diisocyanates, can be used as component d). Suitable monomeric polyisocyanates include aliphatic, cycloaliphatic or aromatic polyisocyanates, in particular diisocyanates. It is possible to use the customary monomeric polyisocyanates or diisocyanates that are available commercially.

Examples of suitable monomeric diisocyanates include1,6-hexamethylene diisocyanate (HDI), 2-methylpenta-methylene 1,5-diisocyanate, 2,2,4- and 2,4,4-trimethyl-1,6-hexamethylene diisocyanate (TMDI) and mixtures of these isomers, 1,10-decamethylene diisocyanate, 1,12-dodecamethylene diisocyanate, lysine diisocyanate and lysine ester diisocyanate, cyclohexane 1,3- and 1,4-diisocyanate and mixtures of these isomers, 1-methyl-2,4- and - 2,6-diisocyanatocyclohexane and mixtures of these isomers (HTDI or H6TDI), 1-isocyanato-3,3,5-trimethyl-5-isocyanatomethylcyclohexane (i.e., isophorone diisocyanate or IPDI), perhydro-2,4'- and -4,4'-diphenylmethane diisocyanate (HMDI or H12MDI) and mixtures of these isomers, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI) and mixtures of these isomers, m- and p- tetramethyl-1,3- and -1,4-xylylene diisocyanate (m- and p-TMXDI) and mixtures of these isomers, bis(1-isocyanato-1-methylethyl)naphthalene, 2,4- and 2,6-toluylene diisocyanate and mixtures of these isomers (TDI), 4,4'-, 2,4'- and 2,2'-diphenylmethane diisocyanate and mixtures of these isomers (MDI), 1,3- and 1,4-phenylene diisocyanate and mixtures of these isomers, 2,3,5,6-tetramethyl-1,4-diisocyanatobenzene, naphthalene 1,5-diisocyanate (NDI), 3,3'-dimethyl-4,4'-diisocyanatobiphenyl (TODI), dianisidine diisocyanate (DADI), and also mixtures of the aforesaid isocyanates. For the formulation of light-stable compositions, preference is given to using aliphatic and cycloaliphatic polyisocyanates.

Preferred monomeric diisocyanates include MDI, TDI, HDI, and IPDI, MDI and in particular, 4,4'-diphenylmethane diisocyanate (4,4'-MDI) and IPDI being especially preferred.

Preferably, the monomeric polyisocyanate, preferably the monomeric diisocyanate, has a molecular weight of not more than 500 g/mol, more preferably not more than 400 g/mol.

### Component e)

One or more mercaptosilanes of formula (I) may be used as component e):

HS-R³-Si(X)₍₃₋ₐ₎(R²)ₐ (I)

wherein R² is a linear or branched alkyl group having 1 to 10 C atoms, R³ is a linear or branched alkylene group having 1 to 10 C atoms, X is a hydrolyzable radical, and a has a value of 0, 1 or 2, preferably 0.

In the formula (I), R² is a linear or branched alkyl group having 1 to 10 C atoms, preferably a linear or branched alkyl group having 1 to 4 C atoms, for example methyl or ethyl. As already indicated, a is preferably 0, and in that case there is no substituent R², and the mercaptosilane has three hydrolyzable groups X.

In the formula (I), R³ is a linear or branched alkylene group having 1 to 10 C atoms, preferably a linear or branched alkylene group having 1 to 6 C atoms, such as methylene, ethylene, propylene, 2-methylpropylene, or 3,3-dimethylbutylene, for example. R³ is more preferably methylene or propylene. The hydrolyzable radicals X may be identical or different. Such hydrolyzable radicals are well known in silane chemistry. Hydrolyzable radicals are groups on a silicon atom that can be hydrolyzed by water, optionally in the presence of catalysts. In the hydrolysis reaction, the hydrolyzable group is displaced from the silicon atom and replaced formally by a hydroxyl group (Si X + H2O → Si-OH + HX). The silanol groups formed in the hydrolysis are reactive and generally undergo spontaneous condensation to form siloxane bridges.

The hydrolyzable radicals X in the mercaptosilane of the formula (I) may be those customary in silicone chemistry. Examples of suitable hydrolyzable radicals X have the formulae (X-1), (X-2), (X-3), (X-4), (X-5), (X-6), (X-7), and (X-8) below, in each of which the dashed line symbolizes the bond to the Si atom. 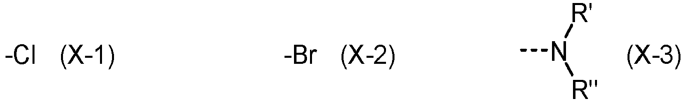 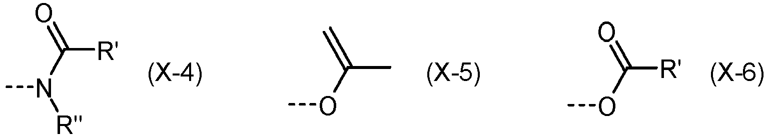 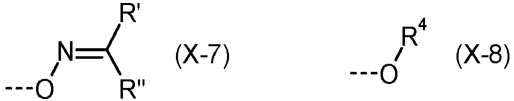 where R' and R" independently of one another are alkyl or aryl and R⁴ is a linear or branched alkyl group having 1 to 10 C atoms, which optionally contains 1 or 2 ether oxygens, more particularly a linear or branched alkyl group having 1 to 4 C atoms, especially methyl, ethyl or isopropyl.

In one specific version, two alkoxy groups -OR⁴ may together be a alkylenedioxy group -OR⁵O-, forming a five-membered or six-membered ring with the silicon atom, where R⁵ is an alkylene group having 2 to 10, more particularly 2 or 3, C atoms. More preferably the hydrolyzable radical X is an alkoxy group -OR⁴, more particularly methoxy, ethoxy or isopropoxy, with methoxy being particularly preferred.

Examples of suitable mercaptosilanes of the formula (I) are mercaptomethyltrimethoxysilane, mercaptomethyltriethoxysilane, mercaptomethyldimethoxymethylsilane, mercaptomethyldiethoxymethylsilane, 3-mercaptopropyltrimethoxysilane, 3-mercaptopropyltriethoxysilane, 3-mercaptopropyltriisopropoxysilane, 3-mercaptopropylmethoxy(1,2-ethylenedioxy)silane, 3-mercaptopropylmethoxy(1,2-propylenedioxy)silane, 3-mercaptopropylethoxy(1,2-propylenedioxy)silane, 3-mercaptopropyldimethoxymethylsilane, 3-mercaptopropyldiethoxymethylsilane, 3-mercapto-2-methylpropyltrimethoxysilane and 4-mercapto-3,3-dimethylbutyltrimethoxysilane.

Preferred mercaptosilanes of the formula (I) are 3-mercaptopropyltrimethoxysilane, 3-mercaptopropyltriethoxysilane, mercaptomethyltrimethoxysilane, and mercaptomethyltriethoxysilane, with 3-mercaptopropyltrimethoxysilane and mercaptomethyltrimethoxysilane being particularly preferred.

The amount of the at least one mercaptosilane of the formula (I) as component e), added to the reaction product obtained in step C), is preferably 0.5 - 3.5 % by weight, more preferably 1 - 3.3 % by weight, even more preferably 1.3 - 3.0 % by weight, and most preferably 1.6 - 2.8 % by weight, based on the total weight of the components a) to e).

It is further preferred that the at least one mercaptosilane of the formula (I) is added to the reaction product obtained in step C) as component e) in an amount of not more than 3.0 % by weight, more preferably not more than 2.8 % by weight, and most preferably not more than 2.5 % by weight, based on the total weight of components a) and e). It is further preferred that the at least one mercaptosilane of the formula (I) is added to the reaction product obtained in step C) as component e) in an amount of at least 1.0 % by weight, more preferably at least 1.8 % by weight, and most preferably at least 2.0 % by weight, based on the total weight of components a) and e).

The preferences given above for the components a) to e) and their amounts apply equally to all aspects of the invention.

### Moisture curing hot-melt adhesive composition

The moisture-curing hotmelt adhesive of the invention has good workability under usual application conditions, in particular at temperatures from 100 to 170°C, meaning that at application temperature the adhesive has sufficiently low viscosity to enable application to a substrate in a molten state. The adhesive also develops a high initial strength immediately after the application to a substrate upon cooling even before the initiation of the crosslinking reaction with atmospheric moisture. In addition, the hot-melt adhesive composition cures quickly in the presence of moisture without producing an odor and without forming any bubbles during the curing process.

Preferably, the moisture curing hot-melt adhesive composition has a softening point measured by Ring and Ball method according to DIN EN 1238 in the range from 60 to 130°C, preferably from 60 to 110°C, more preferably from 70 to 100°C. The low softening point of the adhesive enables the use of low reactivation temperatures, which is required if the adhesive is used for laminating substrates, such polymeric films, having low thermal stability. The low reactivation temperature also means that the amount of energy used in the reactivation is decreased, which translates into improved process economy.

The moisture-curing hotmelt adhesive composition has a viscosity at a temperature of 130°C of less than 100 000 mPa·s, preferably of less than 50 000 mPa·s, most preferably less than 30 000 mPa·s.

The moisture-curing hotmelt adhesive of the invention contains low amounts of monomeric diisocyanates such as MDI and therefore, only small amounts of harmful diisocyanate vapors are potentially released from the adhesive at typical application temperatures of hot-melt adhesives. The low diisocyanate content enables the selling of the moisture curing hot-melt adhesive composition as H351-label free adhesive composition. Furthermore, the moisture curing hot-melt adhesive composition has low rest tackiness, fast curing rate, good initial adhesive strength, and good thermal stability.

### Optional components

The moisture-curing hotmelt adhesive composition may optionally contain additional components (auxiliaries) which are customary for such hot-melt adhesives. The auxiliaries may be added at any desired point in time to the mixtures and/or reaction products obtained in the respective process steps A) to E). In general it is useful for the optional auxiliary or auxiliaries to be added at an elevated temperature, in order to obtain a homogeneous mixture, such as at a temperature of at least 60°C, preferably at least 100°C, and more preferably at least 110°C.

Optional auxiliaries, if used at all, preferably make up not more than 60 % by weight, more preferably not more than 50 % by weight, based on the total weight of the moisture-curing hot-melt adhesive composition.

Examples of suitable optional auxiliaries are one or more thermoplastic polymers and/or one or more additives, more particularly selected from fillers, catalysts, plasticizers, adhesion promoters, UV absorbers, UV stabilizers and heat stabilizers, antioxidants, flame retardants, optical brighteners, pigments, dyes, and dryers.

The thermoplastic polymers are preferably non-reactive thermoplastic polymers. Examples of thermoplastic polymers include homopolymers and copolymers of unsaturated monomers, in particular monomers selected from the group consisting of ethylene, propylene, butylene, isobutylene, isoprene, (meth)acrylates, hydroxyl-functional (meth)acrylates, glycol ether (meth)acrylates, glycol oligo (meth)acrylates, glycol polymer (meth)acrylates, vinyl esters, vinyl ethers, fumarates, maleates, styrene, alkyl styrene, butadiene, acrylonitrile, and mixtures thereof.

Especially suitable as catalysts are those which accelerate the reaction of the isocyanate groups. Examples of suitable catalysts include metal-based catalysts such as dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), further bismuth(III) complexes such as bismuthoctoate or bismuthneodecanoate, zinc(II) complexes, such as zincoctoate or zincneodecanoate, and zirconium(IV) complexes, such as zirconiumoctoate or zirconiumneodecanoate.

Further examples of suitable catalysts include compounds containing amine groups such as, dimorpholinodialkylethers and/or dimorpholino substituted polyalkylene glycols, for example 2,2'-dimorpholinodiethyl ether and 1,4-diazabicyclo[2.2.2]-octane. Combinations of catalyst may also be used, preferably a combination of one or more metal-catalysts with one or more morpholine amine compounds.

The amount of catalyst is preferably in the range from 0.005 to 2.00 % by weigh, more preferably from 0.05 to 1.00 % by weight, based on the total weigh of the moisture curing hot-melt adhesive composition.

According to another aspect of the present invention, a method for producing a moisture curing hot-melt adhesive composition is provided, the method comprising:
A) providing a mixture comprising one or more polyols as component a) and one or more crystalline monofunctional alcohols as component b),
B) adding an isocyanate-functional polyurethane prepolymer having a monomeric diisocyanate content of less than 1.0 % by weight as component c) to the mixture, the ratio of isocyanate groups to hydroxyl groups in the mixture having a value in the range of 1.5 - 2.5,
C) carrying out reaction to give a reaction product comprising at least one isocyanate-functional polyurethane prepolymer modified with crystalline monofunctional alcohol, or
A) providing a mixture comprising one or more polyols as component a) and an isocyanate-functional polyurethane prepolymer having a monomeric diisocyanate content of less than 1.0 % by weight as component c), the ratio of isocyanate groups to hydroxyl groups in the mixture having a value of at least 2.5, preferably at least 3.0,
B) carrying out the reaction to give an intermediate reaction product, and
C) adding at least one crystalline monofunctional alcohol as component b) to the intermediate reaction product and carrying out reaction to give a reaction product comprising at least one isocyanate-functional polyurethane prepolymer modified with crystalline monofunctional alcohol.

The temperature at which the reaction between components a) and c) is conducted corresponds to the typical reaction temperatures used in production of isocyanate-functional polyurethane prepolymers from one or more polyols with the excess of polyisocyanates. Preferably, the reaction between components a) and c) is carried out at a temperature in the range from 60 to 160°C, preferably from 80 to 140°C. The duration of the reaction is dependent on the reaction temperature but it may be in the range from 30 minutes to 3 hours, preferably from 1 hour to 1.5 hours.

Preferably, the amount of the one or more isocyanate-functional polyurethane prepolymers having monomeric diisocyanate content of less than 1.0 % by weight as component c), added to the mixture in step B) or present in the mixture provided in step A), is 20.0 - 70.0 % by weight, preferably 30.0 - 70.0 % by weight, more preferably 35.0 - 65.0 % by weight, most preferably 40.0 - 60.0 % by weight, based on the total weight of the components a) to c).

According to one or more embodiments, the mixture provided in step A) further comprises at least one poly(meth)acrylate.

Preferably, step A) comprises dissolving at least one polyether polyol in the at least one poly(meth)acrylate followed by addition of one or more polyols, preferably polyester polyols, and one or more crystalline monofunctional alcohols as component b) to the thus obtained mixture.

The at least one poly(meth)acrylate is a homopolymer or copolymer of at least one (meth)acrylic acid ester and optionally one or more further comonomers. Suitable (meth)acrylic acid esters include C1-C12-alkyl(meth)acrylates, preferably C1-C4-alkyl(meth)acrylates. Preferable acrylic acid esters and methacrylic acid esters do not contain further functional groups such as hydroxyl- and carboxyl groups. Acrylic acid esters and methacrylic acid esters containing hydroxyl- and/or carboxyl groups can, however, be used in combination with acrylic acid esters and methacrylic acid esters without further functional groups.

Preferably, the amount of the at least one poly(meth)acrylates, if present in the mixture provided in step A), is 10.0 - 50.0 % by weight, more preferably 15.0 - 45.0 % by weight, most preferably 15.0 - 40.0 % by weigh, based on the total weight of components a) to c).

Preferably, the method further comprises
D) adding one or more monomeric polyisocyanates, preferably diisocyanates, as component d) to the mixture provided in step A) or to the reaction product obtained in step C) and carrying out reaction.

The addition of one or more monomeric polyisocyanates as component d) has been found to improve the initial adhesion strength and the thermal stability of the moisture curing hot-melt adhesive.

The amount of the monomeric polyisocyanates as component d) is not subject to any particular restrictions except that the amount thereof should be low enough to obtain moisture curing hot-melt adhesive composition containing less than 1.0 % by weight of monomeric diisocyanates. According to one or more embodiments, the amount monomeric polyisocyanates as component d), preferably diisocyanates, added to the mixture provided in step A) or to the reaction product obtained in step C), is less than 2.0 % by weight, more preferably less than 1.5 % by weight, most preferably less than 1.0 % by weight, based on the total weight of the components a) to d).

According to one or more preferred embodiments the method further comprises:
D) adding one or more monomeric polyisocyanates, preferably diisocyanates, as component d) to the mixture provided in step A) and carrying out reaction, wherein the amount of the one or more monomeric polyisocyanates as component d) is 5.0 - 20.0 % by weight, preferably 7.5 - 15.0 % by weight, based on the total weight of the components a) to d), and wherein
   the method further comprises
E) adding at least one mercaptosilane of formula (I) as component e)

   HS-R³-Si(X)₍₃₋ₐ₎(R²)ₐ (I)

   in which R² is a linear or branched alkyl group having 1 to 10 C atoms, R³ is a linear or branched alkylene group having 1 to 10 C atoms, X is a hydrolyzable radical, and a has a value of 0, 1 or 2, preferably 0,
to the reaction product obtained in step C) and carrying out the reaction to give a reaction product modified with the mercaptosilane.

The reaction of the mercaptosilane with the reaction product to form the modified reaction product takes place preferably at an elevated temperature, as for example at a temperature of at least 60°C, preferably at least 100°C, more preferably at least 110°C or at least 140°C. The duration of the reaction is of dependent on the temperature used, but may for example be from 0.5 to 2 hours, preferably from 45 minutes to 1.5 hours.

The reaction with the mercaptosilane may be conducted in the presence of a catalyst. Examples of suitable catalysts include titanates, organotin compounds, bismuth compounds, with organic ligands and/or complex ligands, for example, and compounds containing amino groups.

According to another aspect of the present invention, a method for adhesively bonding a first foil F1 to a second foil F2 is provided, the method comprising steps of:
i) heating a moisture curing hot-melt adhesive composition of the present invention to a temperature of between 60 and 200°C, preferably 70 and 150°C,
ii) applying the heated hot-melt adhesive composition to the first foil F1 to form an adhesive film on the surface of the first foil F1,
iii) wounding the first foil F1 to a roll,
iv) unwinding the first foil from the roll and reactivating the adhesive film by heating,
v) contacting the reactivated adhesive film with the surface of the second foil F2, and
vi) chemically curing the hot-melt adhesive composition with water, in particular with atmospheric moisture.

Preferably, the time interval between steps ii) and iii) is not more than 60 seconds, preferably not more than 50 seconds, most preferably not more than 40 seconds.

In the method, the hot-melt adhesive composition is heated to a temperature above the softening point of the adhesive composition and applied on the surface of the first foil F1 in molten state using any conventional technique, for example, by slot die coating, roller coating, extrusion coating, calender coating, or spray coating. The hot-melt adhesive composition can be applied to the foil F1 to have a layer thickness of 50 - 150 g/m².

The applied adhesive composition is preferably reactivated by heating to a temperature of between 60 and 200 °C, more preferably 70 and 150°C, most preferably 70 and 120°C. The heating of the applied adhesive film can be conducted using any conventional technique, such as heating in an oven, heating by air stream, or heating with infrared (IR)-radiation. The reactivated adhesive composition is preferably contacted with the second foil shortly after the reactivation temperature is reached, in any case within the open time of the hot-melt adhesive composition.

The moisture curing hot-melt adhesive composition of the present invention is suitable for use as adhesive in thin film laminating, such as vacuum deep draw laminating or IMG-laminating technique. Preferably, in step v) of the method, the first foil F1 is drawn to the second foil F2 using vacuum deep draw laminating technique or IMG-laminating technique.

The method for adhesively bonding a first foil F1 to a second foil F2 can comprise a further step iv'), in which the second foil F2 is preheated before it is contacted with the reactivated adhesive film in step v). The temperature to which the second foil F2 is heated depends on the material of the second foil. In case the second substrate is composed of ABS material, it is preferably heated to a temperature of not more than 100°C. Preferably, the second foil is heated to a temperature in the range from 50 to 100°C, more preferably from 50 to 80°C.

After the adhesive film has been contacted with the second foil F2, the adhesive develops a certain initial adhesive strength by cooling. Depending on the adhesive system used, the application temperature, and the reactivity of the adhesive, the crosslinking reactions in the presence of water may begin already during application of the adhesive composition. Typically, however, the major part of the chemical crosslinking occurs after application, in particular, after the applied adhesive film has been contacted with the second foil F2.

Typical thicknesses for adhesive bonds are 10 micrometers or more. The bond thickness is preferably in the range from 10 micrometers to 1000 micrometers, especially from 80 micrometers to 500 micrometers.

As and when required, the foils F1 and/or F2 may be pretreated prior to the application of the hot-melt adhesive composition. Such pretreatments include, in particular, physical and/or chemical cleaning and activating processes, examples being abrading, sandblasting, brushing, corona treatment, plasma treatment, flame treatment, partial etching or the like, or treatment with cleaners or solvents, or the application of an adhesion promoter, an adhesion promoter solution or a primer.

At least one of the foils F1 or F2 is preferably a polymeric film. The polymeric film can be a flexible flat film composed of polyolefin material, in particular thermoplastic polyolefin (TPO, TPE-O) material. The thickness of the polymeric film can be 0.05 - 5.0 mm, preferably 0.05 - 1.0 mm. The polymeric film can be composed of one single layer or of several layers of different materials. The layer(s) can contain, in addition to TPO material, other polymers and/or additives such as fillers, plasticizers, flame retardants, thermal stabilizers, antioxidants, pigments, dyes, and biocides.

The second foil F2 is preferably a carrier, in particular a three-dimensional shaped article. The carrier or the upper surface of the carrier can be composed of any conventional material including polymeric material, in particular polyolefin material, metal, painted metal, wood, wood derived materials such as natural fiber polypropylene (NFPP), and fiber materials.

Suitable polymeric materials for the carrier include polyethylene (PE), in particular high density polyethylene (HDPE), polypropylene (PP), glass-fiber reinforced polypropylene, polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof.

The term "fiber material" refers to a material composed of fibers. The fibers comprise or consist of organic, inorganic or synthetic material. Examples of suitable fibers include cellulose fibers, cotton fibers, protein fibers, glass fibers, and synthetic fibers made of polyester, or homopolymer or copolymer of ethylene and/or propylene, viscose, or mixtures thereof. The fibers can be short fibers or long fibers, spun, woven or unwoven fibers or filaments. The fibers can moreover be aligned or drawn fibers. Moreover, it can be advantageous to use different fibers, both in terms of geometry and composition, together. Felt and fleece can be mentioned as particularly preferable fiber materials.

According to another aspect of the present invention, an article obtained by using the method for adhesively bonding a first foil F1 to a second foil F2, is provided.

### Examples

The followings compounds and products shown in Table 1 were used in the examples.

**Table 1**

| | | |
|---|---|---|
| Fineplus® HM 1853 | Amorphous polyester polyol, glass transition temperature 30 °C | DIC Performance Resins GmbH |
| Fineplus® HM 1805 | Amorphous polyester polyol, glass transition temperature 50 °C | DIC Performance Resins GmbH |
| Fineplus® HM 2686 | Liquid polyester polyol, glass transition temperature -30 °C | DIC Performance Resins GmbH |
| Dynacoll® 7380 | Crystalline polyester polyol, melting point 70 °C | Evonik Industries |
| Dynacoll® 7360 | Crystalline polyester polyol, melting point 55 °C | Evonik Industries |
| Dynacoll® 7150 | Amorphous polyester polyol, softening point 95 °C | Evonik Industries |
| Hoopol® F-810 | Liquid polyester polyol | Danquinsa GmbH |
| Pearlbond® 501 | Polycaprolactone-copolyester polyurethane, melting point 65 °C | Lubrizol Advanced Materials |
| Desmophen 3600Z MX | Liquid polyether polyol | Bayer |
| Dynacoll AC 1920 | Polyacrylate, softening point 160 °C | Evonik Industries |
| Unilin® 350 | Monoalcohol, melting point 67.8-87.8 | Baker Hughes |
| Unilin® 550 | Monoalcohol, melting point 93.1-104.7 | Baker Hughes |
| Unilin® 700 | Monoalcohol, melting point 101.7-110 | Baker Hughes |
| Jeffcat® DMDLS | Dimorpholinodiethylether catalyst | Huntsman |
| Lupranat® ME | 4,4'-diphenylmethane diisocyanate (MDI) | BASF |
| Desmodur® LS 2397 | NCO-functional polyurethane prepolymer based on polypropylene ether glycol and MDI, MDI monomer content ≤ 0.15 wt.-%, Mₙ 1100-1500 g/mol | Bayer |
| Silanil® 442 | G-mercaptopropyltrimethoxysilane, liquid | BRB International BV |

### Tested hot-melt adhesive compositions

The compositions of Ex 1-Ex 6, and Ex 10 are exemplary formulations whereas C Ex 7, C Ex 8, C Ex 9 and C Ex 11 are comparative formulations corresponding to the state-of-the-art hot-melt adhesive compositions with high rest tackiness.

The hot-melt adhesive compositions presented in Table 2 were prepared according to the procedures as presented below.

### Preparation of adhesive compositions Ex 1 to C Ex 7

A mixture the polyol component and the crystalline alcohol component in the quantities as presented in Table 2 was charged to a 200 g tin can of a standard laboratory reactor equipped with a nonstick coating and a four-neck lid with ground glass joints. This initial charge was molten and kept at a controlled temperature of 140°C for 2 hours.

The molten mixture thus obtained was dewatered under high vacuum with stirring (∼80 rpm) for one hour, while maintaining the temperature at 140°C. Then the polyurethane prepolymer component was added to the reactor and the resulting mixture was reacted with stirring for 1 hour at a temperature of 140°C. After this step the monomeric di-isocyanate component (MDI) was added to the reactor and mixed under vacuum and stirring for 20 minutes at a temperature of 140°C. The obtained reaction product was filled in tubes and stored at room temperature in the absence of moisture.

### Preparation of adhesive compositions C Ex 8 and C Ex 9

A mixture of the polyacrylate and polyether components in the quantities presented in Table 2 was charged into a 200 g tin can of a standard lab reactor equipped with a nonstick coating and a four-neck lid with ground glass joints. The mixture was kept under vacuum with stirring (∼80 rpm) at a temperature of 160 °C for 1 hour until the polyacrylates had been dissolved (in polyether). After the polyacrylates were dissolved, the temperature of the reactor was reduced to 140°C. Then polyester and crystalline alcohol component were added to reactor and the resulting mixture was dewatered under high vacuum with stirring (∼80rpm) for an hour, maintaining the temperature at 140°C.

The monomeric di-isocyanate (MDI) component was then added to the reactor and the resulting mixture was reacted under stirring for 1 hour at a temperature of 140°C. After the reaction step, the catalyst was added to the reactor and mixed under vacuum with stirring for 20 minutes at a temperature of 140°C. The obtained reaction product was filled in tubes and stored at room temperature in the absence of moisture.

### Preparation of adhesive compositions Ex 10 and C Ex 11

A mixture of the polyol component and the crystalline alcohol component in the quantities as presented in Table 2 was charged to a 200 g tin can of a standard laboratory reactor equipped with a nonstick coating and a four-neck lid with ground glass joints. This initial charge was molten and kept at a controlled temperature of 140°C for 2 hours.

The liquid mixture thus obtained was dewatered in under high vacuum with stirring (∼80 rpm) for one hour, while maintaining the temperature at 140°C. Then the monomeric di-isocyanate (MDI) component was added to the reactor and the resulting mixture was reacted under stirring for 1 hour at a temperature of 140°C. After this step, the polyurethane prepolymer component was added to the reactor und mixed under vacuum and stirring for 30 minutes at a temperature of 140°C. Then the silane component was added to the reactor and the resulting mixture was stirred without vacuum for 45 minutes at a temperature of 140°C followed by stirring for 15 minutes under vacuum at the same temperature. The obtained reaction product was filled in tubes and stored at room temperature in the absence of moisture.

### Measurement methods

The moisture curing hot-melt adhesives were characterized using the following measurement methods.

### Viscosity at 130°C

The sample adhesive composition provided in a sealed tube was preheated in an oven at a temperature of 140°C for a time period of 20 minutes. After the heating, a sample of 12.3 g of the adhesive composition was weighted and placed in a disposable sleeve to a viscometer. The viscosity was measured at temperature of 130°C at 5 revolutions per minute using a Brookfield DV-2 Thermosel viscometer with a spindle No. 27. The values obtained 20 minutes tempering at the measurement temperature and five minutes of measurement were recorded as representative viscosities.

### Open time

The sample adhesive composition provided in a sealed tube was first preheated in an oven to at temperature of 140°C for a time period of 20 minutes. After the heating, a sample of 20 g of the molten adhesive was applied with a doctor blade to surface of a silicone paper (B700 white, Laufenberg & Sohn KG) strip placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and placed (with the adhesive film facing upwards) on a sheet of plywood at room temperature (23°C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the paper strip could be removed from the adhesive film without damaging the paper strip or the adhesive film. The time interval between the starting point of the measurement and the last sampling point was recorded as the open time (in seconds) of the adhesive composition

The values of open time presented in Tables 3 and 4 have been obtained as an average of three measurements conducted with the same hot-melt adhesive composition.

### Rest tackiness

The rest tackiness was measured according to the "method for determining the rest tackiness", as described above.

The values of rest tackiness presented in Tables 3 and 4 have been obtained as an average of three measurements conducted with the same hot-melt adhesive composition.

### Curing time

The sample adhesive composition provided in a sealed tube was preheated in an oven to at temperature of 140°C for a time period of 20 minutes. After the heating, a sample of 20 g of the molten adhesive was applied with a doctor blade to surface of a silicone paper (B700 white, Laufenberg & Sohn KG) strip placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and stored at standard climatic conditions (23°C, 55 % relative humidity). The point of time when the adhesive film was solidified was recorded as the starting point of the measurement. At defined sampling times, a test strip having dimensions of 10 cm x 1 cm was cut from the silicone paper strip and placed on a heating plate having a temperature of 150°C. The procedure was continued until the adhesive film on the test strip no longer melted on the heating plate. The length of time interval between the starting point and the last sampling point was recorded as the curing time (in hours) of the adhesive composition.

The values of curing time presented in Tables 3 and 4 have been obtained as an average of 3 measurements conducted with the same hot-melt adhesive composition.

### Green strength

The adhesive composition provided in a sealed tube was preheated in an oven to at a temperature of 140°C for a time period of 20 minutes. After the heating, a sample of the molten adhesive was applied on the surface of a wood specimen (pine) having dimensions of 9 cm x 2 cm x 5 mm. The adhesive was applied as a film having dimensions of 2 cm x 2 cm and a thickness of 1 mm.

Immediately after the application of the adhesive a second wood specimen having same dimensions as the first wood specimen (pine) was positioned over the first wood specimen along the edge of the adhesive film. The second wood specimen was pressed firmly against the first wood specimen to remove air from adhesive bond. A weigh of 150 g was placed on the top surface of the second wood specimen. Any adhesive squeezed out from the joint was trimmed off with a knife. The test specimens consisting of bonded wood specimens were stored for 30 minutes in standard climatic condition (23°C, 55% relative humidity) before measuring the tensile shear strength.

The tensile strength of each test specimen was determined using a material testing apparatus (Zwick Z 020) fulfilling the requirements of the DIN 51221 standard and using a traversing speed of 10 mm/min. The measured tensile strength corresponds to the maximum tensile stress sustained by the test specimen during the measurement and the measured values were rounded up to the next 0.1 N/mm².

The values of green strength presented in Tables 3 and 4 have been obtained as an average of 3 measurements conducted with the same hot-melt adhesive composition.

### Softening point

The softening point of the exemplary hot-melt adhesive compositions was measured by to Ring-And-Ball method according to EN DIN 1238.

### Heat stability under static load (wood-wood)

The adhesive composition provided in a sealed tube was preheated in an oven at a temperature of 140°C for a time period of 20 minutes. After the heating, a sample of molten adhesive was applied on the surface of a wood specimen (pine) having dimensions of 9 cm x 2 cm x 5 mm and having a 1 mm copper wire on its surface as a spacer. The adhesive was applied as a film having dimensions of 2 cm x 2 cm and a thickness of 1 mm.

Immediately after the application of the adhesive a second wood specimen (pine) having same dimensions as the first wood specimen was positioned on the first wood specimen along the edge of the adhesive film. The second wood specimen was pressed firmly against the first wood specimen to remove air from adhesive bond. A weigh of 150 was placed on the top surface of the second wood specimen. Any adhesive squeezed out from the joint was trimmed off with a knife. The test specimens consisting of bonded wood specimens were then stored for 14 days in controlled standard ambient conditions (23°C, 40-60 % relative humidity).

The test specimens were suspended vertically from one end of the first wood specimen on a metal hook and placed in an oven. A metal weight corresponding to a static load of 1 kg was attached to the lower end of the second wood specimen of each test specimen. Three test specimens at a time were placed in the oven for the heat stability measurement.

In the heat stability measurement, the oven was first heated to a temperature, which is 40°C below the anticipated bond failure temperature. The test specimens were kept at this starting temperature for 60 minutes. In case no bond failure occurred, the temperature of the oven was increased by 10°C and the measurement was continued for another 60 minutes. The temperature of the oven was increased in steps of 10°C following the procedure as described above until a bond failure occurred. The last measured temperature before the bond failure occurred was recorded as the heat stability temperature.

The values for heat stability presented in Tables 3 and 4 have been obtained as an average of measurements conducted with three identical test specimens prepared with samples of the same hot-melt adhesive composition.

### SAFT (shear adhesion failure temperature, wood-wood)

Test specimens consisting of two bonded wooden specimens as described above for heat stability measurement were used for measuring the SAFT. The test specimens were suspended vertically from one end of the first wood specimen on a metal hook and placed in an oven, which was preheated to a temperature of 40°C. A metal weight corresponding to a static load of 1 kg was attached to the lower end of the second wood specimen. Three test specimens at a time were placed in the oven for the SAFT measurement.

At the beginning of the measurement, the test specimens were kept in the oven at a temperature of 40°C for a time period of 30 minutes. Then the temperature of the oven was increased at a rate of 0.37 % per minute. The temperature was increased until the adhesive bonds of all test specimens in the oven had been failed. In case the standard deviation calculated from the measured adhesion failure temperatures of the three test specimens was more than 5.0°C, the test was repeated with three new test specimens. The temperature of the oven at the time of adhesion failure was recorded as the respective SAFT value.

The SAFT values presented in Tables 3 and 4 have been obtained as an average of measurements conducted with three identical test specimens prepared with samples of the same hot-melt adhesive composition.

### Storage stability, 16 hours at 140 °C

The storage stability of the tested adhesive compositions was investigated by measuring the increase in viscosity at elevated temperature during a time period of 16 hours.

The adhesive composition provided in a sealed tube was preheated in an oven at a temperature of 140°C for a time period of 20 minutes. After the heating, a sample of 12.3 g of the adhesive composition was placed in a disposable sleeve to a viscometer. The sleeve was kept sealed from atmospheric moisture with an oil film arranged to the surface of the adhesive.

The viscosity was measured at temperature of 140°C at 1 revolution per minute using a Brookfield DV-2 Thermosel viscometer with a spindle No. 27. The measured viscosity values were recorded with a sampling interval of 30 minutes during a time period of 16 hours. The percentage increase of the viscosity during was calculated based on the recorded viscosity values.

The storage stability values presented in Tables 3 and 4 are obtained as an average of 3 measurements conducted with the same hot-melt adhesive composition.

### Residual monomeric diisocyanate content

The amount of unconverted monomeric diisocyanates in the hot-melt adhesive composition was determined by means of HPLC (detection via photodiode array) and the measured values are expressed in % by weight, based on the total weight of the hot-melt adhesive composition.

### Tensile strength and elongation at break

The adhesive composition provided in a sealed tube was preheated in an oven to at temperature of 140°C for a time period of 20 minutes. After the heating, a sample of 40 g of the molten adhesive was applied with a doctor blade to surface of a silicone paper (B700 white, Laufenberg & Sohn KG) strip placed on a heating plate. The silicone paper had dimensions of 60 cm x 10 cm and the adhesive was applied as a film having a thickness of 500 µm and dimensions of 60 cm x 6 cm. Immediately after the application of the adhesive, the silicone paper strip was removed from the heating plate and stored at standard climatic conditions (23°C, 55 % relative humidity).

In a method based on DIN 53504, five rectangular test specimens having dimensions of 2.0 cm x 8.0 cm were cut from a cured adhesive film having a thickness of 500 µm (cured for 14 days at 23°C/50% relative humidity) of the sample. These specimens were clamped into the tensile testing machine (Zwick Z 020) and pulled apart with a speed of 100 mm/min (test conditions 23°C/50% relative humidity). The parameter measured was the maximum tensile stress sustained by the test specimen during the measurement, which was used to determine tensile strength and elongation at break.

The values of tensile strength and elongation at break presented in Tables 3 and 4 have been obtained as an average of five measurements conducted with the same hot-melt adhesive composition.

### Blocking behavior after storing 20 minutes at 40°C

The adhesive composition provided in a sealed tube was preheated in an oven at a temperature of 140°C for a time period of 20 minutes. After the heating, a sample of 20 g of the molten adhesive was applied with a doctor blade to surface of a silicone paper (B700 white, Laufenberg & Sohn KG) strip placed on a heating plate. The silicone paper had dimensions of 30 cm x 10 cm and the adhesive was applied as a film having a thickness of 100 µm and dimensions of 30 cm x 6 cm. Before applying the adhesive film, the silicone paper strip and the doctor blade were heated to a temperature of 150°C with the heating plate.

Immediately after the application of the adhesive, the silicone paper strip was removed from the heating plate and the adhesive film was transferred by reactivation to a first TPO-foil having dimensions of 6.5 cm x 5.0 cm. The first TPO-foil was stored at room temperature (23°C) until the end of the open time, which had previously been determined using the measurement method as described above. The adhesive film was then contacted with the decor side of a second TPO-foil having same dimensions as the first TPO-foil to form a composite foil. A weigh of 0.5 kg/1.0 kg was placed on second TPO-foil and the composite foil with the weight was placed in a heating oven having a temperature of 40°C. The composite was stored in the oven for a period of 20 minutes after which the TPO-foils were separated from each other by hand. Depending on the ease of separation of the TPO-foils, the adhesive film was considered to be slightly tacky (very easy separation of foils), little tacky (easy separation of foils), tacky (slightly difficult separation of foils), or very tacky (difficult separation of foils). The test was then repeated using a loading weight of 1.0 kg.

The values of blocking behavior after 20 minutes storage at 40°C presented in Tables 5 and 6 have been obtained from three measurements conducted with same hot-melt adhesive compositions.

### Blocking behavior of adhesive film after cooling

The adhesive composition provided in a sealed tube was preheated in an oven at a temperature of 140°C for a time period of 20 minutes. After the heating, a sample of 20 g of the molten adhesive was applied with a doctor blade to surface of a silicone paper (B700 white, Laufenberg & Sohn KG) strip placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade are heated to a temperature of 150°C with the heating plate.

Immediately after the application of the adhesive, the silicone paper strip was removed from the heating plate and stored at room temperature (23°C) until the end of the open time, which was recorded as the starting point for measuring of the blocking behavior. After a predefined waiting time (max 60 seconds) the decor side of a TPO-foil having dimensions of 6.5 cm x 5.0 cm was contacted with the adhesive film and pressed against the silicone paper strip for a time period of 60 seconds using a weight of 1 kg. The weight was then removed and the TPO-foil was separated from the adhesive layer. The measurement was then repeated using a longer waiting time.

Depending on the ease of separation of the TPO-foil, the adhesive film was considered to be slightly tacky (very easy separation of foils), little tacky (easy separation of foils), tacky (slightly difficult separation of foils), or very tacky (difficult separation of foils). The measurement was then repeated using a longer waiting time.

The values for blocking behavior after cooling presented in Tables 5 and 6 have been obtained from three measurements conducted with same hot-melt adhesive compositions.

**Table 2**

| **Composition [wt.-%]** | **Ex 1** | **Ex 2** | **Ex 3** | **Ex 4** | **Ex 5** | **Ex 6** | **C Ex 7** | **C Ex 8** | **C Ex 9** | **Ex 10** | **C Ex 11** |
|---|---|---|---|---|---|---|---|---|---|---|---|
| Fineplus HM 1853 | 12.36 | 12.79 | 11.78 | 10.6 | 11.95 | 12.53 | 13.25 | | | 16.78 | 17.25 |
| Fineplus HM 1805 | 18.54 | 19.18 | 17.68 | 15.90 | 17.93 | 18.79 | 19.87 | | | | |
| Fineplus HM 2686 | | | | | | | | | | 4.00 | 4.11 |
| Dynacoll 7380 | 9.27 | 9.59 | 8.84 | 7.95 | 8.96 | 9.40 | 9.93 | | | 27.97 | 28.75 |
| Pearlbond 501 | 3.80 | 3.93 | 3.63 | 3.26 | 3.68 | 3.86 | 4.08 | | | | |
| Dynacoll 7360 | 3.56 | 3.69 | 3.40 | 3.06 | 3.45 | 3.61 | 3.82 | 21.42 | 22.03 | | |
| Dynacoll 7150 | | | | | | | | | | 12.79 | 13.14 |
| Desmophen 3600Z MX | | | | | | | | 36.42 | 37.44 | | |
| Dynacoll AC 1920 | | | | | | | | 27.85 | 28.63 | | |
| Silanil 442 | | | | | | | | | | 1.96 | 2.01 |
| Hoopol F-810 | | | | | | | | | | 11.99 | 12.32 |
| Unilin 550 | 2.00 | 1.03 | 3.29 | 5.95 | | | | 2.01 | | 2.0 | |
| Unilin 350 | | | | | 2.00 | | | | | | |
| Unilin 700 | | | | | | 2.00 | | | | | |
| Jeffcat DMDLS | | | | | | | | 0.02 | 0.02 | | |
| Lupranat ME | 0.95 | 0.98 | 0.91 | 0.82 | 0.92 | 0.96 | 1.02 | 12.25 | 11.86 | 12.75 | 12.37 |
| Desmodur LS 2397 | 49.51 | 48.79 | 50.47 | 52.46 | 51.11 | 48.83 | 48.02 | | | 9.75 | 10.02 |

**Table 3**

| **Example** | **Ex 1** | **Ex 2** | **Ex 3** | **Ex 4** | **Ex 5** | **Ex 6** | **C Ex 7** |
|---|---|---|---|---|---|---|---|
| Viscosity measured at 130 °C [MPa·s] | 21300 | 21100 | 11400 | 6000 | 15400 | 21700 | 35000 |
| Open time, 500 µm [seconds] | 20-25 | 50 | 30 | 20 | 40 | 40 | 50 |
| Rest tackiness after open time [seconds] | 20 | 25 | 20 | 20 | 20 | 10-20 | 60 |
| Curing time [hours] | 25-30 | 25 - 30 | -26 | 28 - 30 | 51 - 52 | 22 - 24 | 28 |
| Green strength after 30 minutes [N/mm²] | 0.61 | 0.58 | 0.56 | 0.68 | 0.42 | 0.61 | 0.5 |
| Softening point [°C] | 81 | 78.7 | 85.5 | 91.1 | 68.3 | 81.8 | 77 |
| Heat stability under static load [°C] | 140 | 140 | 140 | 140 | 130 | 140 | 150 |
| SAFT [°C] | 156 | 161 | 158 | 150 | 152 | 158 | 162 |
| Thermal stability at 140 °C, 16 hours [%] | 330 | 280 | 300 | 95 | 292 | 131 | 65 |
| Residual diisocyanate monomer content [wt.-%] | 0.59 | 0.97 | 0.63 | 0.62 | 0.71 | 0.64 | 0.6 |
| Tensile strength [N/mm²] | 23.9 | 26.5 | 25.3 | 21 | 13.2 | 26.3 | 20 |
| Elongation at break [%] | 395 | 390 | 415 | 410 | 390 | 406 | 350 |

**Table 4**

| **Example** | **C Ex 8** | **C Ex 9** | **Ex 10** | **C Ex 11** |
|---|---|---|---|---|
| Viscosity measured at 130 °C [MPa·s] | 3000 | 5000 | 19500 | 30000 |
| Open time, 500 µm [seconds] | 60 | 180 | 20 | 40 |
| Rest tackiness after open time [seconds] | 120 | "longer" | Not tacky | 15 |
| Curing time [hours] | 5-8 | 6-8 | 27-30 | 30 |
| Green strength after 30 minutes [N/mm²] | 0.72 | 0.7 | 1.0 | 0.9 |
| Softening point [°C] | 85.6 | 75.0 | 79 | 75 |
| Heat stability under static load [°C] | 140 | 150 | 170 | 180 |
| SAFT [°C] | 164 | 163 | 175 | 182 |
| Thermal stability at 140 °C, 16 hours [%] | 0 | 0 | 360 | 80 |
| Residual diisocyanate monomer content [wt.-%] | 1.69 | 1.65 | 0.85 | 0.9 |
| Tensile strength [N/mm²] | 10.5 | 13.2 | 17 | 15 |
| Elongation at break [%] | 630 | 675 | 400 | 350 |

**Table 5**

| **Example** | **Ex 1** | **Ex 2** | **Ex 3** | **Ex 4** | **Ex 5** | **Ex 6** | **C Ex 7** |
|---|---|---|---|---|---|---|---|
| **Blocking behavior after storing at 40 °C** | | | | | | | |
| 0.5 kg, 20 min | - | ○ | - | - | ○+ | ○ | ○+ |
| 1.0 kg, 20 min | - | ○(+) | ○ | - | + | ○ | ○+ |

| **Blocking behavior after cooling** | | | | | | | |
|---|---|---|---|---|---|---|---|
| Open time + 10 seconds | -○ | - | - | - | ○ | - | + |
| Open time + 20 seconds | -○ | - | - | - | ○ | - | + |
| Open time + 30 seconds | -○ | - | - | - | ○ | - | ++ |
| Open time + 40 seconds | -○ | - | - | - | ○ | - | ++ |
| Open time + 50 seconds | - | - | -- | -- | ○ | - | ++ |
| Open time + 60 seconds | - | - | -- | -- | ○ | - | ++ |

| | | | | | | | |
|---|---|---|---|---|---|---|---|
| - = slightly tacky, ○ = little tacky, + = tacky, ++ very tacky | | | | | | | |

**Table 6**

| **Example** | **Ex 8** | **C Ex 9** | **Ex 10** | **C Ex 11** |
|---|---|---|---|---|
| **Blocking behavior after storing at 40 °C** | | | | |
| 0.5 kg, 20 min | - | **+** | - | - |
| 1.0 kg, 20 min | - | **+** | - | ○ |

| **Blocking behavior after cooling** | | | | |
|---|---|---|---|---|
| Open time + 10 seconds | -○ | ++ | - | ○ |
| Open time + 20 seconds | -○ | ++ | - | ○ |
| Open time + 30 seconds | -○ | ++ | - | ○ |
| Open time + 40 seconds | -○ | ++ | - | ○ |
| Open time + 50 seconds | -○ | ++ | - | ○ |
| Open time + 60 seconds | -○ | ++ | - | ○ |

| | | | | |
|---|---|---|---|---|
| - = slightly tacky, ○ = little tacky, + = tacky, ++ very tacky | | | | |

## Claims

1. A moisture curing hot-melt adhesive composition comprising at least one isocyanate-functional polyurethane prepolymer modified with crystalline monofunctional alcohol, wherein the adhesive composition has a monomeric diisocyanate content of not more than 1.0 % by weight, preferably not more than 0.9 % by weight, most preferably not more than 0.8 % by weight, wherein the moisture curing hot-melt adhesive composition is obtainable by reacting one or more polyols, one or more crystalline monofunctional alcohols, and one or more isocyanate-functional polyurethane prepolymers having a monomeric diisocyanate content of less than 1.0 % by weight, the ratio of isocyanate groups to hydroxyl groups in the reaction mixture having a value in the range of 1.2 - 2.5.

2. A moisture curing hot-melt adhesive composition according to claim 1, wherein the ratio of isocyanate groups to hydroxyl groups in the reaction mixture has a value in the range of 1.5 - 2.5.

3. The moisture curing hot-melt adhesive composition according to claim 1 or 2, wherein the crystalline monofunctional alcohol has a melting point of not less than 60 °C, preferably not less than 70°C.

4. The moisture curing hot-melt adhesive composition according to any of previous claims comprising 10.0 - 70.0 % by weight, preferably 15.0 - 60.0 % by weight, most preferably 20.0 - 50.0 % by weight of the isocyanate-functional polyurethane prepolymer modified with crystalline monofunctional alcohol.

5. The moisture curing hot-melt adhesive composition according to any of previous claims having a rest tackiness, determined by means of the method cited in the description, of less than 60 s, preferably less than 50 s, most preferably less than 40 s.

6. The moisture curing hot-melt adhesive composition according to any of previous claims obtainable by a process comprising:
A) providing a mixture comprising one or more polyols as component a) and one or more crystalline monofunctional alcohols as component b),
B) adding an isocyanate-functional polyurethane prepolymer having a monomeric diisocyanate content of less than 1.0 % by weight as component c) to the mixture, the ratio of isocyanate groups to hydroxyl groups in the mixture having a value in the range of 1.5 -2.5,
C) carrying out reaction to give a reaction product comprising at least one isocyanate-functional polyurethane prepolymer modified with crystalline monofunctional alcohol.

7. The moisture curing hot-melt adhesive composition according to claim 6, wherein the mixture provided in step A) further comprises at least one poly(meth)acrylate.

8. The moisture curing hot-melt adhesive composition according to any of claims 1-7, wherein the isocyanate-functional polyurethane prepolymer having a monomeric diisocyanate content of less than 1.0 % by weight is obtained as a reaction product of at least one polyether polyol, preferably polypropylene glycol, and at least one monomeric diisocyanate selected from the group consisting of MDI, TDI, HDI, and IPDI, and wherein the monomeric diisocyanate content of the reaction product has subsequently been reduced or largely removed from the reaction product by extraction or, in particular, distillation.

9. The moisture curing hot-melt adhesive composition according to any of claims 6-8, wherein the amount of the one or more crystalline monofunctional alcohol as component b) in the mixture provided in step A) is 0.5 - 10.0 % by weight, preferably 0.5 - 7.5 % by weight, more preferably 1.0 - 5.0 % by weight, most preferably 1.0 - 3.0 % by weight, and/or the amount of the one or more isocyanate-functional polyurethane prepolymers having monomeric diisocyanate content of less than 1.0 % by weight as component c) added to the mixture in step B) is 20.0 - 70.0 % by weight, preferably 30.0 - 70.0 % by weight, more preferably 35.0 - 65.0 % by weight, most preferably 40.0 - 60.0 % by weight, all the proportions being based on the total weight of the components a) to c).

10. The moisture curing hot-melt adhesive composition according to any of claims 6-9, wherein the process further comprises:
D) adding one or more monomeric polyisocyanates, preferably diisocyanates, as component d) to the mixture provided in step A) or to the reaction product obtained in step C) and carrying out reaction, wherein the amount of the one or more monomeric polyisocyanates as component d) is less than 2.0 % by weight, preferably less than 1.0 % by weight, based on the total weight of the components a) to d).

11. The moisture curing hot-melt adhesive composition according to any of claims 6-9, wherein the process further comprises:
D) adding one or more monomeric polyisocyanates, preferably diisocyanates, as component d) to the mixture provided in step A) and carrying out reaction, wherein the amount of the one or more monomeric polyisocyanates as component d) is 5.0 - 20.0 % by weight, preferably 7.5 - 15.0 % by weight, based on the total weight of the components a) to d), and wherein
the process further comprises
E) adding at least one mercaptosilane of formula (I) as component e)
HS-R³-Si(X)₍₃₋ₐ₎(R²)ₐ (I)
in which R² is a linear or branched alkyl group having 1 to 10 C atoms, R³ is a linear or branched alkylene group having 1 to 10 C atoms, X is a hydrolyzable radical, and a has a value of 0, 1 or 2, preferably 0,
to the reaction product obtained in step C) and carrying out the reaction to give a reaction product modified with the mercaptosilane.

12. A method for producing a moisture curing hot-melt adhesive composition comprising:
A) providing a mixture comprising one or more polyols as component a) and one or more crystalline monofunctional alcohols as component b),
B) adding an isocyanate-functional polyurethane prepolymer having a monomeric diisocyanate content of less than 1.0 % by weight as component c) to the mixture, the ratio of isocyanate groups to hydroxyl groups in the mixture having a value in the range of 1.5 -2.5,
C) carrying out reaction to give a reaction product comprising at least one isocyanate-functional polyurethane prepolymer modified with crystalline monofunctional alcohol.

13. The method according to claim 12, wherein the amount of the one or more isocyanate-functional polyurethane prepolymers having monomeric diisocyanate content of less than 1.0 % by weight as component c) added to the mixture is 20.0 - 70.0 % by weight, preferably 30.0 - 70.0 % by weight, more preferably 35.0 - 65.0 % by weight, most preferably 40.0 - 60.0 % by weight, based on the total weight of the components a) to c).

14. The method according to claim 12 or 13, wherein the method further comprises
D) adding one or more monomeric polyisocyanates, preferably diisocyanates, as component d) to the mixture provided in step A) or to the reaction product obtained in step C) and carrying out reaction, wherein the amount of the one or more monomeric polyisocyanates as component d) is less than 2.0 % by weight, preferably less than 1.0 % by weight, based on the total weight of the components a) to d).

15. The method according to claim 12 or 13, wherein the method further comprises
D) adding one or more monomeric polyisocyanates, preferably diisocyanates, as component d) to the mixture provided in step A) and carrying out reaction, wherein the amount of the one or more monomeric polyisocyanates as component d) is 5.0 - 20.0 % by weight, preferably 7.5 - 15.0 % by weight, based on the total weight of the components a) to d), and wherein
the method further comprises
E) adding at least one mercaptosilane of formula (I) as component e)
HS-R³-Si(X)₍₃₋ₐ₎(R²)ₐ (I)
in which R² is a linear or branched alkyl group having 1 to 10 C atoms, R³ is a linear or branched alkylene group having 1 to 10 C atoms, X is a hydrolyzable radical, and a has a value of 0, 1 or 2, preferably 0,
to the reaction product obtained in step C) and carrying out the reaction to give a reaction product modified with the mercaptosilane.

16. A method for adhesively bonding a first foil F1 to a second foil F2, comprising steps of:
i) heating a moisture curing hot-melt adhesive composition according to any of claims 1-11 to a temperature of between 60 and 200°C,
ii) applying the heated hot-melt adhesive composition to the first foil F1 to form an adhesive film on the surface of the first foil F1,
iii) wounding the first foil F1 to a roll,
iv) unwinding the first foil from the roll and reactivating the adhesive film by heating,
v) contacting the reactivated adhesive film with the surface of the second foil F2, and
vi) chemically curing the moisture curing hot-melt adhesive composition with water, in particular with atmospheric moisture,
wherein the time interval between steps ii) and iii) is not more than 60 seconds, preferably not more than 50 seconds, most preferably not more than 40 seconds.

17. An article obtained by using the method according to claim 16.

## Patentansprüche

1. Feuchtigkeitshärtende Heißschmelzklebstoffzusammensetzung, umfassend mindestens ein isocyanatfunktionelles Polyurethan-Prepolymer, das mit kristallinem monofunktionellem Alkohol modifiziert ist, wobei die Klebstoffzusammensetzung einen Gehalt an monomeren Diisocyanaten von nicht mehr als 1,0 Gew.-%, vorzugsweise nicht mehr als 0,9 Gew.-%, ganz besonders bevorzugt nicht mehr als 0,8 Gew.-%, aufweist, wobei die feuchtigkeitshärtende Heißschmelzklebstoffzusammensetzung durch Umsetzung eines oder mehrerer Polyole, eines oder mehrerer kristalliner monofunktioneller Alkohole und eines oder mehrerer isocyanatfunktioneller Polyurethan-Prepolymere mit einem Gehalt an monomeren Diisocyanaten von weniger als 1,0 Gew.-% erhältlich sind, wobei das Verhältnis von Isocyanatgruppen zu Hydroxylgruppen in der Reaktionsmischung einen Wert im Bereich von 1,2-2,5 aufweist.

2. Feuchtigkeitshärtende Heißschmelzklebstoffzusammensetzung nach Anspruch 1, wobei das Verhältnis von Isocyanatgruppen zu Hydroxylgruppen in der Reaktionsmischung einen Wert im Bereich von 1,5-2,5 aufweist.

3. Feuchtigkeitshärtende Heißschmelzklebstoffzusammensetzung nach Anspruch 1 oder 2, wobei der kristalline monofunktionelle Alkohol einen Schmelzpunkt von nicht weniger als 60 °C, vorzugsweise nicht weniger als 70 °C, aufweist.

4. Feuchtigkeitshärtende Heißschmelzklebstoffzusammensetzung nach einem der vorhergehenden Ansprüche, umfassend 10,0-70,0 Gew.-%, vorzugsweise 15,0-60,0 Gew.-%, ganz besonders 20,0-50,0 Gew.-%, des isocyanatfunktionellen Polyurethan-Prepolymers, das mit kristallinem monofunktionellem Alkohol modifiziert ist.

5. Feuchtigkeitshärtende Heißschmelzklebstoffzusammensetzung nach einem der vorhergehenden Ansprüche mit einer mit Hilfe der in der Beschreibung angegebenen Methode bestimmten Restklebrigkeit von weniger als 60 s, vorzugsweise weniger als 50 s, ganz besonders bevorzugt weniger als 40 s.

6. Feuchtigkeitshärtende Heißschmelzklebstoffzusammensetzung nach einem der vorhergehenden Ansprüche, die durch ein Verfahren erhältlich ist, das Folgendes umfasst:
A) Bereitstellen einer Mischung, die ein oder mehrere Polyole als Komponente a) und einen oder mehrere kristalline monofunktionelle Alkohole als Komponente b) umfasst,
B) Zugeben eines isocyanatfunktionellen Polyurethan-Prepolymers mit einem Gehalt an monomeren Diisocyanaten von weniger als 1,0 Gew.-% als Komponente c) zu der Mischung, wobei das Verhältnis von Isocyanatgruppen zu Hydroxylgruppen in der Mischung einen Wert im Bereich von 1,5-2,5 aufweist,
C) Umsetzen zum Erhalt eines Reaktionsprodukts, das mindestens ein isocyanatfunktionelles Polyurethan-Prepolymer, das mit kristallinem monofunktionellem Alkohol modifiziert ist, umfasst.

7. Feuchtigkeitshärtende Heißschmelzklebstoffzusammensetzung nach Anspruch 6, wobei die in Schritt A) bereitgestellte Mischung ferner mindestens ein Poly(meth)acrylat umfasst.

8. Feuchtigkeitshärtende Heißschmelzklebstoffzusammensetzung nach einem der vorhergehenden Ansprüche, wobei das isocyanatfunktionelle Polyurethan-Prepolymer mit einem Gehalt an monomeren Diisocyanaten von weniger als 1,0 Gew.-% als Reaktionsprodukt von mindestens einem Polyetherpolyol, vorzugsweise Polypropylenglykol, und mindestens einem monomeren Diisocyanat aus der Gruppe bestehend aus MDI, TDI, HDI und IPDI erhalten wird und wobei der Gehalt des Reaktionsprodukts an monomeren Diisocyanaten anschließend durch Extraktion oder insbesondere Destillation verringert oder größtenteils aus dem Reaktionsprodukt entfernt wurde.

9. Feuchtigkeitshärtende Heißschmelzklebstoffzusammensetzung nach einem der Ansprüche 6-8, wobei die Menge des einen oder der mehreren kristallinen monofunktionellen Alkohole als Komponente b) in der in Schritt A) bereitgestellten Mischung 0,5-10 Gew.-%, vorzugsweise 0,5-7,5 Gew.-%, weiter bevorzugt 1,0-5,0 Gew.-%, ganz besonders bevorzugt 1,0-3,0 Gew.-%, beträgt und/oder die Menge des einen oder der mehreren isocyanatfunktionellen Polyurethan-Prepolymere mit einem Gehalt an monomeren Diisocyanaten von weniger als 1,0 Gew.-% als Komponente c), die der Mischung in Schritt B) zugegeben wird, 20,0-70,0 Gew.-%, vorzugsweise 30,0-70,0 Gew.-%, weiter bevorzugt 35,0-65,0 Gew.-%, ganz besonders bevorzugt 40,0-60,0 Gew.-%, beträgt, wobei alle Anteile auf dem Gesamtgewicht der Komponenten a) bis c) basieren.

10. Feuchtigkeitshärtende Heißschmelzklebstoffzusammensetzung nach einem der Ansprüche 6-9, wobei das Verfahren ferner Folgendes umfasst:
D) Zugeben von einem oder mehreren monomeren Polyisocyanaten, vorzugsweise Diisocyanaten, als Komponente d) zu der in Schritt A) bereitgestellten Mischung oder zu dem in Schritt C) erhaltenen Reaktionsprodukt und Umsetzen, wobei die Menge des einen oder der mehreren monomeren Polyisocyanate als Komponente d) weniger als 2,0 Gew.-%, vorzugsweise weniger als 1,0 Gew.-%, basierend auf dem Gesamtgewicht der Komponenten a) bis d), beträgt.

11. Feuchtigkeitshärtende Heißschmelzklebstoffzusammensetzung nach einem der Ansprüche 6-9, wobei das Verfahren ferner Folgendes umfasst:
D) Zugeben von einem oder mehreren monomeren Polyisocyanaten, vorzugsweise Diisocyanaten, als Komponente d) zu der in Schritt A) bereitgestellten Mischung und Umsetzen, wobei die Menge des einen oder der mehreren monomeren Polyisocyanate als Komponente d) 5,0-20,0 Gew.-%, vorzugsweise 7,5-15,0 Gew.-%, basierend auf dem Gesamtgewicht der Komponenten a) bis d), beträgt, und wobei
das Verfahren ferner Folgendes umfasst:
E) Zugeben mindestens eines Mercaptosilans der Formel (I) als Komponente e)
HS-R³-Si(X)₍₃₋ₐ₎(R²)ₐ (I),
in der R² für eine lineare oder verzweigte Alkylgruppe mit 1 bis 10 C-Atomen steht, R³ für eine lineare oder verzweigte Alkylgruppe mit 1 bis 10 C-Atomen steht, X für einen hydrolysierbaren Rest steht und a einen Wert von 0, 1 oder 2, vorzugsweise 0, aufweist,
zu dem in Schritt C) erhaltenen Reaktionsprodukt und Umsetzen zu einem Reaktionsprodukt, das mit dem Mercaptosilan modifiziert ist.

12. Verfahren zur Herstellung einer feuchtigkeitshärtenden Heißschmelzklebstoffzusammensetzung, das Folgendes umfasst:
A) Bereitstellen einer Mischung, die ein oder mehrere Polyole als Komponente a) und einen oder mehrere kristalline monofunktionelle Alkohole als Komponente b) umfasst,
B) Zugeben eines isocyanatfunktionellen Polyurethan-Prepolymers mit einem Gehalt an monomeren Diisocyanaten von weniger als 1,0 Gew.-% als Komponente c) zu der Mischung, wobei das Verhältnis von Isocyanatgruppen zu Hydroxylgruppen in der Mischung einen Wert im Bereich von 1,5-2,5 aufweist,
C) Umsetzen zum Erhalt eines Reaktionsprodukts, das mindestens ein isocyanatfunktionelles Polyurethan-Prepolymer, das mit kristallinem monofunktionellem Alkohol modifiziert ist, umfasst.

13. Verfahren nach Anspruch 12, wobei die Menge des einen oder der mehreren isocyanatfunktionellen Polyurethan-Prepolymere mit einem Gehalt an monomeren Diisocyanaten von weniger als 1,0 Gew.-% als Komponente c), die der Mischung zugegeben wird, 20,0-70,0 Gew.-%, vorzugsweise 30,0-70,0 Gew.-%, weiter bevorzugt 35,0-65,0 Gew.-%, ganz besonders bevorzugt 40,0-60,0 Gew.-%, basierend auf dem Gesamtgewicht der Komponenten a) bis c), beträgt.

14. Verfahren nach Anspruch 12 oder 13, wobei das Verfahren ferner Folgendes umfasst:
D) Zugeben von einem oder mehreren monomeren Polyisocyanaten, vorzugsweise Diisocyanaten, als Komponente d) zu der in Schritt A) bereitgestellten Mischung oder zu dem in Schritt C) erhaltenen Reaktionsprodukt und Umsetzen, wobei die Menge des einen oder der mehreren monomeren Polyisocyanate als Komponente d) weniger als 2,0 Gew.-%, vorzugsweise weniger als 1,0 Gew.-%, basierend auf dem Gesamtgewicht der Komponenten a) bis d), beträgt.

15. Verfahren nach Anspruch 12 oder 13, wobei das Verfahren ferner Folgendes umfasst:
D) Zugeben von einem oder mehreren monomeren Polyisocyanaten, vorzugsweise Diisocyanaten, als Komponente d) zu der in Schritt A) bereitgestellten Mischung und Umsetzen, wobei die Menge des einen oder der mehreren monomeren Polyisocyanate als Komponente d) 5,0-20,0 Gew.-%, vorzugsweise 7,5-15,0 Gew.-%, basierend auf dem Gesamtgewicht der Komponenten a) bis d), beträgt, und wobei
das Verfahren ferner Folgendes umfasst:
E) Zugeben mindestens eines Mercaptosilans der Formel (I) als Komponente e)
HS-R³-Si(X)₍₃₋ₐ₎(R²)ₐ (I),
in der R² für eine lineare oder verzweigte Alkylgruppe mit 1 bis 10 C-Atomen steht, R³ für eine lineare oder verzweigte Alkylgruppe mit 1 bis 10 C-Atomen steht, X für einen hydrolysierbaren Rest steht und a einen Wert von 0, 1 oder 2, vorzugsweise 0, aufweist,
zu dem in Schritt C) erhaltenen Reaktionsprodukt und Umsetzen zu einem Reaktionsprodukt, das mit dem Mercaptosilan modifiziert ist.

16. Verfahren zur Verklebung einer ersten Folie F1 mit einer zweiten Folie F2, umfassend die Schritte
i) Erhitzen einer feuchtigkeitshärtenden Heißschmelzklebstoffzusammensetzung nach einem der Ansprüche 1-11 auf eine Temperatur zwischen 60 und 200 °C,
ii) Aufbringen der erhitzten Heißschmelzklebstoffzusammensetzung auf die erste Folie F1 zur Bildung eines Klebstofffilms auf der Oberfläche der ersten Folie F1,
iii) Aufwickeln der ersten Folie F1 auf einer Rolle,
iv) Abwickeln der ersten Folie von der Rolle und Reaktivieren des Klebstofffilms durch Erhitzen,
v) Kontaktieren des reaktivierten Klebstofffilms mit der Oberfläche der zweiten Folie F2 und
vi) chemisches Härten der feuchtigkeitshärtenden Heißschmelzklebstoffzusammensetzung mit Wasser, insbesondere mit Luftfeuchtigkeit,
wobei das Zeitintervall zwischen den Schritten ii) und iii) nicht mehr als 60 Sekunden, vorzugsweise nicht mehr als 50 Sekunden, ganz besonders bevorzugt nicht mehr als 40 Sekunden, beträgt.

17. Artikel, erhalten durch Verwendung des Verfahrens nach Anspruch 16.

## Revendications

1. Composition d'adhésif thermofusible durcissant à l'humidité comprenant au moins un prépolymère de polyuréthane fonctionnalisé par isocyanate modifié par un alcool monofonctionnel cristallin, la composition d'adhésif possédant une teneur en diisocyanate monomérique non supérieure à 1,0 % en poids, préférablement non supérieure à 0,9 % en poids, le plus préférablement non supérieure à 0,8 % en poids, la composition d'adhésif thermofusible durcissant à l'humidité pouvant être obtenue par la mise en réaction d'un ou plusieurs polyols, d'un ou plusieurs alcools monofonctionnels cristallins, et d'un ou plusieurs prépolymères de polyuréthane fonctionnalisé par isocyanate possédant une teneur en diisocyanate monomérique inférieure à 1,0 % en poids, le rapport des groupes isocyanate sur les groupes hydroxyle dans le mélange réactionnel possédant une valeur dans la plage de 1,2 à 2,5.

2. Composition d'adhésif thermofusible durcissant à l'humidité selon la revendication 1, le rapport des groupes isocyanate sur les groupes hydroxyle dans le mélange réactionnel possédant une valeur dans la plage de 1,5 à 2,5.

3. Composition d'adhésif thermofusible durcissant à l'humidité selon la revendication 1 ou 2, l'alcool monofonctionnel cristallin possédant un point de fusion supérieur ou égal à 60 °C, préférablement supérieur ou égal à 70 °C.

4. Composition d'adhésif thermofusible durcissant à l'humidité selon l'une quelconque des revendications précédentes comprenant 10,0 à 70,0 % en poids, préférablement 15,0 à 60,0 % en poids, le plus préférablement 20,0 à 50,0 % en poids du prépolymère de polyuréthane fonctionnalisé par isocyanate modifié par un alcool monofonctionnel cristallin.

5. Composition d'adhésif thermofusible durcissant à l'humidité selon l'une quelconque des revendications précédentes possédant une pégosité au repos, déterminée au moyen du procédé cité dans la description, inférieure à 60 s, préférablement inférieure à 50 s, le plus préférablement inférieure à 40 s.

6. Composition d'adhésif thermofusible durcissant à l'humidité selon l'une quelconque des revendications précédentes, qui peut être obtenue par un procédé comprenant :
A) la mise à disposition d'un mélange comprenant un ou plusieurs polyols en tant que composant a) et un ou plusieurs alcools monofonctionnels cristallins en tant que composant b),
B) l'ajout d'un prépolymère de polyuréthane fonctionnalisé par isocyanate possédant une teneur en diisocyanate monomérique inférieure à 1,0 % en poids en tant que composant c) au mélange, le rapport des groupes isocyanate sur les groupes hydroxyle dans le mélange possédant une valeur dans la plage de 1,5 à 2,5,
C) la mise en œuvre d'une réaction pour donner un produit de réaction comprenant au moins un prépolymère de polyuréthane fonctionnalisé par isocyanate modifié par un alcool monofonctionnel cristallin.

7. Composition d'adhésif thermofusible durcissant à l'humidité selon la revendication 6, le mélange mis à disposition dans l'étape A) comprenant en outre au moins un poly(méth)acrylate.

8. Composition d'adhésif thermofusible durcissant à l'humidité selon l'une quelconque des revendications 1 à 7, le prépolymère de polyuréthane fonctionnalisé par isocyanate possédant une teneur en diisocyanate monomérique inférieure à 1,0 % en poids étant obtenu en tant qu'un produit de réaction d'au moins un polyéther polyol, préférablement un polypropylèneglycol, et d'au moins un diisocyanate monomérique choisi dans le groupe constitué par le MDI, le TDI, l'HDI, et l'IPDI, et la teneur en diisocyanate monomérique du produit de réaction ayant été subséquemment réduite ou largement éliminée du produit de réaction par extraction ou, en particulier, par distillation.

9. Composition d'adhésif thermofusible durcissant à l'humidité selon l'une quelconque des revendications 6 à 8, la quantité du ou des alcools monofonctionnels cristallins en tant que composant b) dans le mélange mis à disposition dans l'étape A) étant de 0,5 à 10,0 % en poids, préférablement 0,5 à 7,5 % en poids, plus préférablement 1,0 à 5,0 % en poids, le plus préférablement 1,0 à 3,0 % en poids, et/ou la quantité du ou des prépolymères de polyuréthane fonctionnalisé par isocyanate possédant une teneur en diisocyanate monomérique inférieure à 1,0 % en poids en tant que composant c) ajouté au mélange dans l'étape B) étant de 20,0 à 70,0 % en poids, préférablement 30,0 à 70,0 % en poids, plus préférablement 35,0 à 65,0 % en poids, le plus préférablement 40,0 à 60,0 % en poids, toutes les proportions étant basées sur le poids total des composants a) à c).

10. Composition d'adhésif thermofusible durcissant à l'humidité selon l'une quelconque des revendications 6 à 9, le procédé comprenant en outre :
D) l'ajout d'un ou plusieurs polyisocyanates monomériques, préférablement des diisocyanates, en tant que composant d) au mélange mis à disposition dans l'étape A) ou au produit de réaction obtenu dans l'étape C) et la mise en œuvre d'une réaction, la quantité du ou des polyisocyanates monomériques en tant que composant d) étant inférieure à 2,0 % en poids, préférablement inférieure à 1,0 % en poids, sur la base du poids total des composants a) à d).

11. Composition d'adhésif thermofusible durcissant à l'humidité selon l'une quelconque des revendications 6 à 9, le procédé comprenant en outre :
D) l'ajout d'un ou plusieurs polyisocyanates monomériques, préférablement des diisocyanates, en tant que composant d) au mélange mis à disposition dans l'étape A) et la mise en œuvre d'une réaction, la quantité du ou des polyisocyanates monomériques en tant que composant d) étant de 5,0 à 20,0 % en poids, préférablement 7,5 à 15,0 % en poids, sur la base du poids total des composants a) à d), et le procédé comprenant en outre
E) l'ajout d'au moins un mercaptosilane de formule (I) en tant que composant e)
HS-R³-Si(X)₍₃₋ₐ₎(R²)ₐ (I)
dans laquelle R² est un groupe alkyle linéaire ou ramifié possédant 1 à 10 atomes de C, R³ est un groupe alkylène linéaire ou ramifié possédant 1 à 10 atomes de C, X est un radical hydrolysable, et a possédant une valeur de 0, 1 ou 2, préférablement 0,
au produit de réaction obtenu dans l'étape C) et la mise en œuvre de la réaction pour donner un produit de réaction modifié par le mercaptosilane.

12. Procédé pour la production d'une composition d'adhésif thermofusible durcissant à l'humidité comprenant :
A) la mise à disposition d'un mélange comprenant un ou plusieurs polyols en tant que composant a) et un ou plusieurs alcools monofonctionnels cristallins en tant que composant b),
B) l'ajout d'un prépolymère de polyuréthane fonctionnalisé par isocyanate possédant une teneur en diisocyanate monomérique inférieure à 1,0 % en poids en tant que composant c) au mélange, le rapport des groupes isocyanate sur les groupes hydroxyle dans le mélange possédant une valeur dans la plage de 1,5 à 2,5,
C) la mise en œuvre d'une réaction pour donner un produit de réaction comprenant au moins un prépolymère de polyuréthane fonctionnalisé par isocyanate modifié par un alcool monofonctionnel cristallin.

13. Procédé selon la revendication 12, la quantité du ou des prépolymères de polyuréthane fonctionnalisé par isocyanate possédant une teneur en diisocyanate monomérique inférieure à 1,0 % en poids en tant que composant c) ajouté au mélange étant de 20,0 à 70,0 % en poids, préférablement 30,0 à 70,0 % en poids, plus préférablement 35,0 à 65,0 % en poids, le plus préférablement 40,0 à 60,0 % en poids, sur la base du poids total des composants a) à c).

14. Procédé selon la revendication 12 ou 13, le procédé comprenant en outre
D) l'ajout d'un ou plusieurs polyisocyanates monomériques, préférablement des diisocyanates, en tant que composant d) au mélange mis à disposition dans l'étape A) ou au produit de réaction obtenu dans l'étape C) et la mise en œuvre d'une réaction, la quantité du ou des polyisocyanates monomériques en tant que composant d) étant inférieure à 2,0 % en poids, préférablement inférieure à 1,0 % en poids, sur la base du poids total des composants a) à d).

15. Procédé selon la revendication 12 ou 13, le procédé comprenant en outre
D) l'ajout d'un ou plusieurs polyisocyanates monomériques, préférablement des diisocyanates, en tant que composant d) au mélange mis à disposition dans l'étape A) et la mise en œuvre d'une réaction, la quantité du ou des polyisocyanates monomériques en tant que composant d) étant de 5,0 à 20,0 % en poids, préférablement 7,5 à 15,0 % en poids, sur la base du poids total des composants a) à d), et le procédé comprenant en outre
E) l'ajout d'au moins un mercaptosilane de formule (I) en tant que composant e)
HS-R³-Si(X)₍₃₋ₐ₎(R²)ₐ (I)
dans laquelle R² est un groupe alkyle linéaire ou ramifié possédant 1 à 10 atomes de C, R³ est un groupe alkylène linéaire ou ramifié possédant 1 à 10 atomes de C, X est un radical hydrolysable, et a possédant une valeur de 0, 1 ou 2, préférablement 0,
au produit de réaction obtenu dans l'étape C) et la mise en œuvre de la réaction pour donner un produit de réaction modifié par le mercaptosilane.

16. Procédé pour la liaison de manière adhésive d'une première feuille F1 à une deuxième feuille F2, comprenant les étapes de :
i) chauffage d'une composition d'adhésif thermofusible durcissant à l'humidité selon l'une quelconque des revendications 1 à 11 à une température entre 60 et 200 °C,
ii) application de la composition d'adhésif thermofusible chauffée à la première feuille F1 pour former un film d'adhésif sur la surface de la première feuille F1,
iii) enroulement de la première feuille F1 pour donner un rouleau,
iv) déroulement de la première feuille du rouleau et réactivation du film d'adhésif par chauffage,
v) mise en contact du film d'adhésif réactivé avec la surface de la deuxième feuille F2, et
vi) durcissement de manière chimique de la composition d'adhésif thermofusible durcissant à l'humidité avec de l'eau, en particulier avec de l'humidité atmosphérique, l'intervalle de temps entre les étapes ii) et iii) n'étant pas supérieur à 60 secondes, préférablement pas supérieur à 50 secondes, le plus préférablement pas supérieur à 40 secondes.

17. Article obtenu par l'utilisation du procédé selon la revendication 16.
